# EUROPEAN PATENT APPLICATION

(11) **EP 2 762 445 A1**
(43) Date of publication of application: **06.08.2014**
(21) Application number: 12836471.8
(22) Date of filing: 28.09.2012
(51) Int. Cl.: C01B 31/02, B82Y 30/00, C08K 3/04, C08L 101/00, H01B 1/24

(54) **CARBON NANOTUBE COMPOSITE MATERIAL**

(30) Priority: 29.09.2011 JP 2011213995
(71) Applicant: National Institute of Advanced Industrial Science and Technology, Tokyo 100-8921 (JP)
(72) Inventor: HATA, Kenji, Tsukuba-shi Ibaraki 305-8565 (JP); ATA, Seisuke, Tsukuba-shi Ibaraki 305-8565 (JP); YAMADA, Takeo, Tsukuba-shi Ibaraki 305-8565 (JP)
(74) Representative: Ahner, Philippe
(86) International application number: PCT/JP2012/075176
(87) International publication number: WO 2013/047796

(57) **Abstract**

A carbon nanotube composite material capable of exhibiting a high conductivity with a small amount of carbon nanotubes is realized. A carbon nanotube composite material according to the present invention contains carbon nanotubes dispersed in a matrix and includes a carbon nanotube group formed of a plurality of carbon nanotubes, and a basic material area. The carbon nanotubes are contained in an amount of 0.0001% by weight or greater and 1.0% by weight or less; and the carbon nanotube composite material has a conductivity of 10⁻⁷ S/cm or greater.

## Description

### TECHNICAL FIELD

The present invention relates to a carbon nanotube composite material containing carbon nanotubes dispersed in a matrix.

### BACKGROUND ART

A carbon nanotube composite material containing a conductive filler incorporated into a polymer foam or an elastomer is used in a variety of fields including, for example, electronic products, computers, medical devices and the like as a gasket or a seal for blocking electrostatic waves and/or releasing static electricity. In the past, conductivity was usually provided by use of microparticles of metal materials, carbon black or the like.

However, many of such conventional conductive fillers are in the form of microparticles, and a large amount of such a conductive filler is needed in order to provide a matrix with conductivity. When the amount of the conductive filler is increased, however, the carbon nanotube composite material becomes, for example, rigid. This arises a problem that the inherent properties of the matrix are spoiled.

As the size of electronic components is decreased and use of plastic components becomes increasingly common, a conductive filler needs to be incorporated into the matrix in a smaller amount especially in consumer electronic devices. In such a situation, carbon nanotubes, which have a high conductivity, a high aspect ratio and one-dimensional shape, now attract attention as a material of the conductive filler.

However, the carbon nanotubes easily aggregate due to the Van der Waals force. Therefore, when being incorporated into a matrix of elastomer or the like, carbon nanotubes aggregate into a bundle and thus is not easily dispersed. A few methods for unbinding the carbon nanotubes from the aggregating state to improve the dispersibility have been introduced (e.g., Patent Literature 1).

By such technology for dispersing carbon nanotubes in a matrix uniformly, carbon nanotube composite materials using carbon nanotubes have been developed. For example, when carbon nanotubes containing carbon fibers extending three-dimensionally (radially) from the central position are incorporated into an elastomer, specific carbon nanotubes are dispersed uniformly in the elastomer because of the three-dimensional shape thereof. As a result, a continuous conductive path is formed in the entirety of the elastomer. In this manner, a flexible electrode having a high conductivity has been realized (Patent Literature 2).

A carbon nanotube composite material containing a carbon nanotube rubber composition formed of carbon nanotubes, ionic liquid, and rubber which is miscible with the ionic liquid has a sufficient conductivity to be used as a material of an electronic circuit and an elasticity that is not inferior to that of common rubber materials. Carbon nanotube rubber, carbon nanotube rubber paste, and conductive materials using the paste for a rubber substrate, which are usable to produce a stretchable electronic device that realizes flexible electronics, have been developed (Non-patent Literature 1). However, a carbon nanotube composite material according to such conventional art has a problem that conductivity is not provided unless the carbon nanotubes are provided in a large amount.

### CITATION LIST

### PATENT LITERATURE

Patent Literature 1: Japanese Laid-Open Patent Publication No. 2007-330848
Patent Literature 2: Japanese Laid-Open Patent Publication No. 2008-198425

### NON-PATENT LITERATURE

Non-patent Literature 1: Tsuyoshi Sekitani et al., A Rubberlike Stretchable Active Matrix Using Elastic Conductors, SCIENCE, 2008.9.12, vol. 321, pp. 1468-1472

### SUMMARY OF INVENTION

### TECHNICAL PROBLEM

The present invention has an object of solving the above-described problems of the conventional art and providing a carbon nanotube composite material exhibiting a high conductivity with a small amount of carbon nanotubes.

### SOLUTION TO PROBLEM

According to an embodiment of the present invention, a carbon nanotube composite material containing carbon nanotubes dispersed in a matrix is provided. The carbon nanotube composite material includes a carbon nanotube group formed of a plurality of carbon nanotubes, and a basic material area. The carbon nanotube composite material has a conductivity of 10⁻⁷ S/cm or greater while containing the carbon nanotubes in an amount of 0.0001% by weight or greater and 1.0% by weight or less.

A ratio of a maximum peak intensity of the carbon nanotube group in the range of 1560 cm⁻¹ or greater and 1600 cm⁻¹ or less observed by a Raman spectroscopic analysis performed at a wavelength of 633 nm, with respect to a maximum peak intensity of the basic material area in the range of 1560 cm⁻¹ or greater and 1600 cm⁻¹ or less observed by the Raman spectroscopic analysis performed at a wavelength of 633 nm, may be 5 or greater.

According to an embodiment of the present invention, a carbon nanotube composite material containing carbon nanotubes dispersed in a matrix is provided. The carbon nanotube composite material includes a carbon nanotube group formed of a plurality of carbon nanotubes, and a basic material area. The carbon nanotube group has a peak in the range of 1560 cm⁻¹ or greater and 1600 cm⁻¹ or less when being subjected to a Raman spectroscopic analysis performed at a wavelength of 633 nm; and the basic material area does not have a peak in the range of 1560 cm⁻¹ or greater and 1600 cm⁻¹ or less when being subjected to the Raman spectroscopic analysis performed at a wavelength of 633 nm.

The carbon nanotube composite material has a conductivity of greater than 10⁻¹¹ S/cm.

In the carbon nanotube composite material, the carbon nanotube group has a fractal dimension of 1.7 or greater.

In the carbon nanotube composite material, the carbon nanotubes are contained in an amount of 0.0001% by weight or greater and 5% by weight or less where mass of the entirety of the carbon nanotube composite material is 100% by weight.

The carbon nanotube composite material includes carbon nanotubes having a conductivity of 10 S/cm or greater.

In the carbon nanotube composite material, the carbon nanotubes each have a length of 0.1 µm or greater.

In the carbon nanotube composite material, the carbon nanotubes have an average diameter of 1 nm or greater and 30 nm or less.

In the carbon nanotube composite material, a carbon purity of the carbon nanotubes found by an analysis performed by use of fluorescence X rays is 90% by weight or greater.

When the carbon nanotube composite material is subjected to a Raman spectroscopic analysis performed at a wavelength of 633 nm, at least one peak is observed in each of areas of 110±10 cm⁻¹, 190±10 cm⁻¹ and 200 cm⁻¹ or greater.

In the carbon nanotube composite material, a spectrum obtained by a resonance Raman scattering method has a G/D ratio of 3 or greater where G is a maximum peak intensity in the range of 1560 cm⁻¹ or greater and 1600 cm⁻¹ or less and D is a maximum peak intensity in the range of 1310 cm⁻¹ or greater and 1350 cm⁻¹ or less.

In the carbon nanotube composite material, the carbon nanotubes are single-walled carbon nanotubes.

In the carbon nanotube composite material, the matrix is an elastomer.

In the carbon nanotube composite material, the elastomer is at least one selected from natural rubber, epoxidized natural rubber, styrene-butadiene rubber, nitrile rubber, chloroprene rubber, ethylenepropylene rubber, butyl rubber, chlorobutyl rubber, acrylic rubber, silicone rubber, fluorocarbon rubber, butadiene rubber, epoxidized butadiene rubber, epichlorohydrin rubber, urethane rubber, polysulfide rubber, olefin-based thermoplastic elastomer, polyvinyl chloride-based thermoplastic elastomer, polyester-based thermoplastic elastomer, polyurethane-based thermoplastic elastomer, polyamide-based thermoplastic elastomer, and styrene-based thermoplastic elastomer.

In the carbon nanotube composite material, the matrix is a resin.

In the carbon nanotube composite material, the resin is at least one selected from unsaturated polyester, vinyl ester, epoxy, phenol (resol type), urea-melamine, polyimide, polyethylene terephthalate, polybutylene terephthalate, polytrimethylene terephthalate, polyethylene naphthalate, liquid crystal polyester, polyethylene, polypropylene, polybutylene, styrene-based resins, polyoxymethylene, polyamide, polycarbonate, polymethylenemethacrylate, polyvinylchloride, polyphenylenesulfide, polyphenyleneether, modified polyphenyleneether, polyimide, polyamideimide, polyetherimide, polysulfone, polyethersulfone, polyketone, polyetherketone, polyetheretherketone, polyetherketoneketone, polyarylate, polyethernitrile, phenol-based resins, phenoxy resins, and polytetrafluoroethylene.

### ADVANTAGEOUS EFFECTS OF INVENTION

According to the present invention, a carbon nanotube composite material having an extremely low percolation threshold can be realized. In addition, a carbon nanotube composite material having a high conductivity with a small amount of carbon nanotubes can be realized. Furthermore, a carbon nanotube composite material retaining the physical properties of the basic material although having conductivity can be realized.

### BRIEF DESCRIPTION OF DRAWINGS

[FIG. 1] FIG. 1 is a schematic view of a carbon nanotube composite material 100 in an embodiment according to the present invention.
[FIG. 2] FIG. 2 is a schematic view showing a matrix structure in which CNT agglomerates 10 are aggregated and separated in an embodiment according to the present invention.
[FIG. 3] FIG. 3 shows, in comparison, the percolation threshold of a carbon nanotube composite material according to the present invention and the percolation threshold of a carbon nanotube composite material reported in past literature.
[FIG. 4] FIG.4 shows the relationship between the percolation threshold and the conductivity of carbon nanotube composite materials according to the present invention.
[FIG. 5] FIG. 5 shows the conductivity and the Young's modulus of a fluorocarbon rubber composite material which are changed in accordance with the amount of CNTs in a carbon nanotube composite material according to the present invention.
[FIG. 6] FIG. 6 shows a schematic view of a production apparatus used to produce a carbon nanotube composite material in an embodiment according to the present invention.
[FIG. 7] FIG. 7 is a flowchart showing a production process of a carbon nanotube composite material in an embodiment according to the present invention.
[FIG. 8] FIG. 8(a) shows a scanning electron microscopic image of a cross-section of a carbon nanotube composite material 200 in an example, and FIG.8(b) shows a scanning electron microscopic image of a cross-section of a carbon nanotube composite material 900 in Comparative example 1.
[FIG. 9] FIG. 9(a) shows a scanning electron microscopic image of a cross-section of the carbon nanotube composite material 200 in an example, and FIG. 9(b) shows a laser microscopic image thereof.
[FIG. 10] FIG. 10 shows optical microscopic images of a cross-section of a carbon nanotube composite material 210 in an example; FIG. 10(a) shows a 500x optical microscopic image, and FIG. 10(b) shows a 1000x optical microscopic image.
[FIG. 11] FIG. 11 shows optical microscopic images of a cross-section of the carbon nanotube composite material 210 in an example; FIG. 11(a) shows a 2000x optical microscopic image, and FIG. 11(b) shows a 3000x optical microscopic image.
[FIG. 12] FIG. 12 shows optical microscopic images of a cross-section of a carbon nanotube composite material 230 in an example; FIG. 12(a) shows a 1000x optical microscopic image, and FIG. 12(b) shows a 2000x optical microscopic image.
[FIG. 13] FIG. 13 shows a 5000x optical microscopic image of a cross-section of the carbon nanotube composite material 230 in an example.
[FIG. 14] FIG.14 shows optical microscopic images of cross-sections of carbon nanotube composite materials in examples; FIG.14(a) shows a 1000x optical microscopic image of a carbon nanotube composite material 230, and shows a 5000x optical microscopic image of a carbon nanotube composite material 240.
[FIG. 15] FIG. 15 shows optical microscopic images of a cross-section of the carbon nanotube composite material 230 in an example; FIG. 15(a) shows a 3000x optical microscopic image, FIG. 15(b) shows a 2000x optical microscopic image, FIG. 15(c) shows a 1000x optical microscopic image, and FIG.15(d) shows a 2000x optical microscopic image.
[FIG. 16] FIG. 16 shows optical microscopic images of a cross-section of the carbon nanotube composite material 240 in an example; FIG. 16(a) shows a 2000x optical microscopic image, FIG. 16(b) shows a 1000x optical microscopic image, FIG. 16(c) shows a 3000x optical microscopic image, and FIG.16(d) shows a 1000x optical microscopic image.
[FIG. 17] FIG. 17 shows optical microscopic images of a carbon nanotube composite material 900 in a comparative example.
[FIG. 18] FIG. 18 shows optical microscopic images of a carbon nanotube composite material 910 in a comparative example.
[FIG. 19] FIG. 19 shows an SEM image of a carbon nanotube composite material 930 in a comparative example.
[FIG. 20] FIG.20 provides Raman mapping performed on the carbon nanotube composite material 200 in an example; FIG. 20(a) shows an optical microscopic image of an area on which Raman mapping was performed, FIG. 20(b) shows Raman spectra of the sites labeled with numerical figures 1 and 5 through 8 in FIG. 20(a), and
FIG. 20(c) shows Raman spectra of the sites labeled with numerical figures 2 through 4 in FIG. 20(a).
[FIG. 21] FIG.21 provides Raman mapping performed on the carbon nanotube composite material 900 in a comparative example.
[FIG. 22] FIG. 22 provides a table showing properties of a carbon nanotube composite material in each example.
[FIG. 23] FIG. 23 shows results of a fractal dimension analysis performed on carbon nanotube composite materials in an example and a comparative example.

### DESCRIPTION OF EMBODIMENTS

Hereinafter, a carbon nanotube composite material according to the present invention will be described with reference to the drawings. The carbon nanotube composite material according to the present invention is not limited to the description in any of the embodiments or examples shown below. In the figures referred to in the embodiments and the examples described later, identical parts or parts having substantially the same functions will bear identical reference signs and the descriptions thereof will not be repeated.

Conventionally, the technology has been developed for the purpose of dispersing conductive fillers in a matrix as uniformly as possible. The present invention is based on a largely different technological idea therefrom. A carbon nanotube composite material according to the present invention does not contain carbon nanotubes (hereinafter, referred to as "CNTs") dispersed in a matrix uniformly, but contains CNTs dispersed in the matrix non-uniformly. Namely, the carbon nanotube composite material according to the present invention includes a carbon nanotube group formed of a plurality of CNTs (hereinafter, referred to as a "CNT group") and a basic material area where almost no CNT is present or CNTs are present at a lower CNT density than the CNT density of the CNT group. As described later, in this specification, when it is described that no CNT is present, such a description indicates that in a graph obtained by a Raman spectroscopic analysis performed at a wavelength of 633 nm, no conspicuous point of inflection and/or no projection of 500% or greater with respect to the baseline intensity is visually confirmed in the range of 1560 cm⁻¹ or greater and 1600 cm⁻¹ or less.

The carbon nanotube composite material according to the present invention is provided with conductivity by a continuous conductive path formed among CNTs which form the CNT group. Since the CNT density of the CNT group is higher than that of the basic material area, the probability and frequency at which the CNTs contact each other in the CNT group can be raised. Therefore, the CNT group can have a high conductivity with a small amount of CNTs. The CNT group having such a high conductivity forms a continuous conductive path, and as a result, the carbon nanotube composite material can be provided with a high conductivity with a small amount of CNTs.

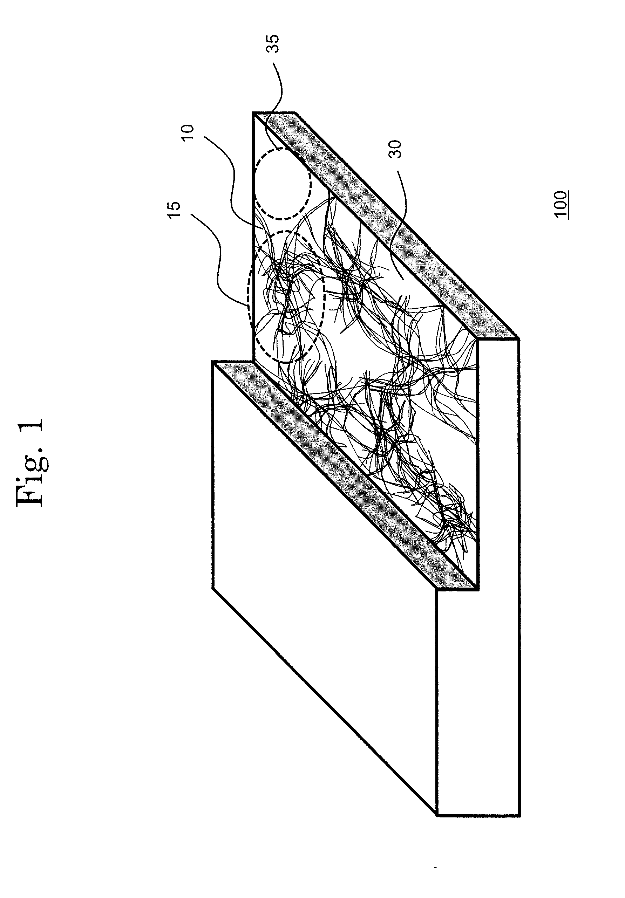

FIG. 1 is a schematic view of a carbon nanotube composite material 100 in an embodiment according to the present invention. FIG. 1 is a partially cut view of the carbon nanotube composite material 100 and shows the inside thereof in an exposed manner. In the carbon nanotube composite material 100 according to the present invention, carbon nanotubes 10 are dispersed in a matrix 30 non-uniformly. As shown in FIG. 1, when a cross-section of the carbon nanotube composite material 100 is observed by an optical microscope, CNT groups 15 each formed of a plurality of carbon nanotubes and basic material areas 35 having a low density of carbon nanotubes are observed.

### [CNT group]

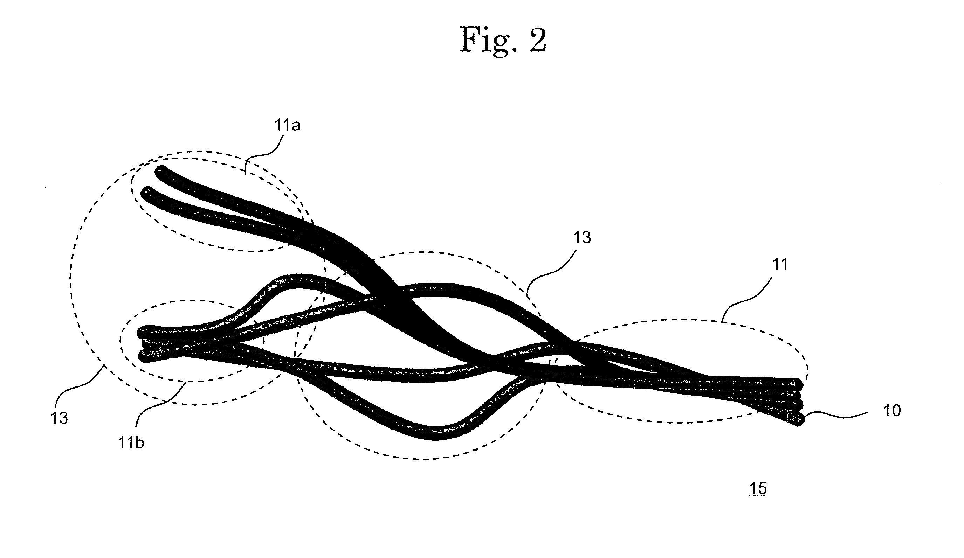

The CNT groups each have a network structure (net structure) in which a plurality of CNTs (or bundles of CNTs) are entangled with each other while being separated and aggregated. Regarding each CNT group including a plurality of "aggregated" CNTs, when it is described that the CNTs are "separated and aggregated", such a description indicates that a part of the CNTs is locally aggregated or scattered, namely, "separated". (For the sake of convenience, FIG. 2 shows a CNT group 15 including a plurality of CNTs 10 includes aggregated parts 11 and a separated part 13. In FIG. 2, the aggregated part 11a and the aggregated part 11b are separated from each other.) In the carbon nanotube composite material 100, each CNT group 15 has a three-dimensional net structure. The net structure of the CNT group 15 forms a highly developed and wide network. The CNTs 10 forming each CNT group 15 are communicated to each other to form a continuous conductive path in the carbon nanotube composite material 100. As a result, the carbon nanotube composite material 100 is provided with conductivity. In this specification, the CNT group 15 is an area where an agglomerate of carbon nanotubes 10 is observed when being observed by an optical microscope.

### [Basic material area]

In this specification, the "basic material area" is an area where no agglomerate of carbon nanotubes 10 is observed when being observed by an optical microscope. As described above, the carbon nanotubes 10 are dispersed in the matrix 30 non-uniformly in the carbon nanotube composite material 100. Therefore, the basic material areas 35 are observed.

The basic material areas 35 are formed of the matrix 30, and therefore can retain the physical properties of the matrix 30 although the carbon nanotube composite material 100 is conductive. In the case where, for example, the matrix 30 is an elastomer, the basic material areas 35 can provide the conductive carbon nanotube composite material 100 with dynamic properties and flexibility equivalent to those of the elastomer. In order to provide the effect of the present invention, it is preferable that the carbon nanotube composite material 100 according to the present invention includes a plurality of CNT groups 15 and a plurality of basic material areas 35. In the carbon nanotube composite material 100 according to the present invention, it is preferable that the CNT groups 15 are formed along edges of the basic material areas 35. In the carbon nanotube composite material 100 according to the present invention, it is preferable that the CNT groups 15 are located so as to surround the basic material areas 35. Such CNT groups 15 are located as if soap bubble membranes and surround the basic material areas 35, and also easily form a continuous conductive path. This is preferable to provide the effect of the present invention. In the case where the carbon nanotube composite material 100 according to the present invention has a sea-and-island structure formed of the basic material areas 35 and the CNT groups 15, the above-described effect is more conspicuous, and the CNT groups 15 form a continuous conductive path more easily. In this case, the CNT groups 15 may be the islands while the basic material areas 35 may be the seas; or alternatively, the CNT groups 15 may be the seas while the basic material areas 35 may be the islands. Either structure can be preferably used.

### [Raman spectrum]

The carbon nanotubes present in the CNT groups 15 and the basic material areas 35 can be identified by a Raman spectroscopic analysis and quantitatively evaluated. The CNT groups 15 and the basic material areas 35 in the carbon nanotube composite material 100 according to the present invention are observed by an optical microscope. However, it cannot be distinguished whether or not there are CNTs present in the basic material areas 35 merely by an optical microscope. Even when there are CNTs present in the basic material areas 35, quantitative evaluation cannot be made merely by an optical microscope. Therefore, a Raman spectroscopic analysis is effective to define a structure of the carbon nanotube composite material 100. Regarding the carbon nanotubes used for the carbon nanotube composite material 100 according to the present invention, a clear G-band is observed in a spectrum of the CNT groups 15 obtained by measurement performed by a resonance Raman scattering measurement method, where the G-band (caused by a graphite structure of the carbon nanotubes) is a peak having a maximum intensity in the range of 1560 cm⁻¹ or greater and 1600 cm⁻¹ or less of the spectrum. Herein, the "peak" refers to a conspicuous point of inflection and/or a projection of 500% or greater with respect to the baseline intensity that is visually confirmed in the graph. In the spectrum of the basic material areas 35, the G band is not observed; or even if observed, the G band of the basic material areas 35 has a smaller intensity than that of the G band of the CNT groups 15. Namely, in the spectrum of the basic material areas 35 obtained by measurement performed by a resonance Raman scattering measurement method, no peak is observed in the range of 1560 cm⁻¹ or greater and 1600 cm⁻¹ or less. Even if observed, the peak is significantly smaller than the peak of the CNT groups 15. Herein, when it is described that the peak is not observed, such a description indicates that no projection of 500% or greater with respect to the baseline intensity is observed. Herein, when it is described that the peak is not observed, such a description indicates that no conspicuous point of inflection and/or no projection of 500% or greater with respect to the baseline intensity is visually confirmed in the range of 1560 cm⁻¹ or greater and 1600 cm⁻¹ or less in a graph obtained by a Raman spectroscopic analysis performed at a wavelength of 633 nm. Namely, regarding the carbon nanotubes used for the carbon nanotube composite material 100 according to the present invention, the spectrum of the CNT groups 15 and the spectrum of the basic material areas 35 obtained by measurement performed by a resonance Raman scattering measurement method are different from each other in the range of 1560 cm⁻¹ or greater and 1600 cm⁻¹ or less.

The ratio of the maximum intensity of the G band observed in the CNT groups 15 with respect to the maximum Raman intensity in the range of 1560 cm⁻¹ or greater and 1600 cm⁻¹ or less observed in the basic material areas 35 is 5 or greater, more preferably 10 or greater, and still more preferably 20 or greater. A carbon nanotube composite material having a maximum intensity ratio in such a range contains CNTs dispersed in the matrix non-uniformly and thus is more likely to provide the effect of the present invention.

The Raman spectroscopic analysis is preferably measured at a wavelength of 633 nm. In this case, the CNTs in the carbon nanotube composite material can be properly evaluated whichever type of matrix may be used among various types of matrix. Measurement performed at a wavelength of 532 nm is not appropriate because the Raman spectrum depends on the type of matrix. Laser light used for the Raman spectroscopic analysis preferably has a diameter of 500 nm or greater and 10 µm or less in order to observe the CNT groups 15 and the basic material areas 35.

The CNT groups 15 included in the carbon nanotube composite material 100 each have an area size of 10 µm or greater, more preferably 15 µm, and still more preferably 20 µm. The CNT groups 15 are each a three-dimensional network spreading to small parts of a wide area, and the CNT groups 15 contact each other. Therefore, it is difficult to measure the area size of each CNT group 15. Thus, according to the present invention, the area size of each CNT group 15 is defined by use of a two-dimensional image observed in an optical microphotograph of a sheared face or the like of the carbon nanotube composite material. The area size of each CNT group 15 is defined for each of all points which form the net structure of the CNT group 15 observed in the two-dimensional image, and is defined as the maximum value of a distance between each of above-mentioned points and a point in the CNT group 15 that is farthest from the point.

Since the CNT groups 15 contact each other to form a continuous conductive path, there is a CNT group 15 having a substantially infinite area size by the above-described measurement method. Therefore, it is preferable that the carbon nanotube composite material 100 includes the CNT groups 15 continuously connecting a top end and a bottom end and/or a left end and a right end of a 300 µm-square area of a 1000x optical microscopic image.

The carbon nanotube composite material 100 according to the present invention preferably includes the CNT groups 15 each having an area size of 10 µm or greater, more preferably 15 µm or greater, and still more preferably 20 µm or greater while containing an amount of carbon nanotubes of 1.0% by weight or less, preferably 0.5% by weight or less, more preferably 0.2% by weight or less, and still more preferably 0.1% by weight or less.

The carbon nanotube composite material 100 according to the present invention preferably includes the CNT groups 15 connecting a top end and a bottom end and/or a left end and a right end of a 300 µm-square area of a 1000x optical microscopic image of the carbon nanotube composite material 100 while containing an amount of carbon nanotubes of 1.0% by weight or less, preferably 0.5% by weight or less, more preferably 0.2% by weight or less, and still more preferably 0.1% by weight or less.

In such a carbon nanotube composite material 100, the carbon nanotubes 10 contact each other efficiently inside each CNT group 15 and between the CNT groups 15 to form a continuous conductive path. Therefore, the amount of carbon nanotubes 10 to be incorporated is decreased at a percolation threshold, and a high conductivity is provided at a small amount of carbon nanotubes 10.

The carbon nanotube composite material 100 preferably includes the basic material areas 35 each having an area size of 10 µm or greater, preferably 15 µm or greater, and more preferably 20 µm or greater. The basic material areas 35 are surrounded by the three-dimensional network of CNTs. Therefore, it is difficult to measure the area size of each basic material area 35. Thus, according to the present invention, the area size of each basic material area 35 is defined by use of a two-dimensional image observed in an optical microphotograph of a sheared face or the like of the carbon nanotube composite material. The area size of each basic material area 35 is defined for each of all points which form the basic material area 35 observed in the two-dimensional image, and is defined as the maximum value of a distance between each of the above-mentioned points and a point in the basic material area 35 that is farthest from the point.

The carbon nanotube composite material 100 according to the present invention preferably includes the basic material areas 35 surrounded by the CNT groups 15. The basic material areas 35 surrounded by the CNT groups 15 each have an area size of 10 µm or greater, more preferably 15 µm or greater, and still more preferably 20 µm or greater.

The carbon nanotube composite material 100 according to the present invention preferably includes the basic material areas 35 surrounded by the CNT groups 15 while containing an amount of carbon nanotubes of 1.0% by weight or less, preferably 0.5% by weight or less, more preferably 0.2% by weight or less, and still more preferably 0.1% by weight or less. The basic material areas 35 surrounded by the CNT groups 15 each have an area size of 10 µm or greater, more preferably 15 µm or greater, and still more preferably 20 µm or greater.

When such basic material areas 35 are provided, the CNT groups 15 are located as if soap bubble membranes and easily form a continuous conductive path. In addition, the large basic material areas 35 provide the carbon nanotube composite material 100 with the physical properties of the matrix, which is preferable to provide the effect of the present invention.

The basic material areas 35 formed of the matrix 30 contain a small amount of carbon nanotubes. As a result, the basic material areas 35 can retain the physical properties of the matrix. Since the basic material areas 35 are present with the above-described area size, the carbon nanotube composite material 100 can have the physical properties of the matrix 30.

### [Percolation]

The percolation theory is regarding how the target substance is connected in the system, and what influence is exerted by a feature of the manner of connection on the characteristics of the system. In a composite material containing a conductor, the conductor components are coupled at a specified concentration (threshold) to form a cluster having an infinite size that is formed throughout the entire system of the composite material. Thus, conductivity is generated. In order to realize a cluster having an infinite size, the concentration (probability) p of the conductor needs to be greater than the critical percolation concentration or the percolation threshold p_{c}. A conductor having a high aspect ratio has a low percolation threshold.

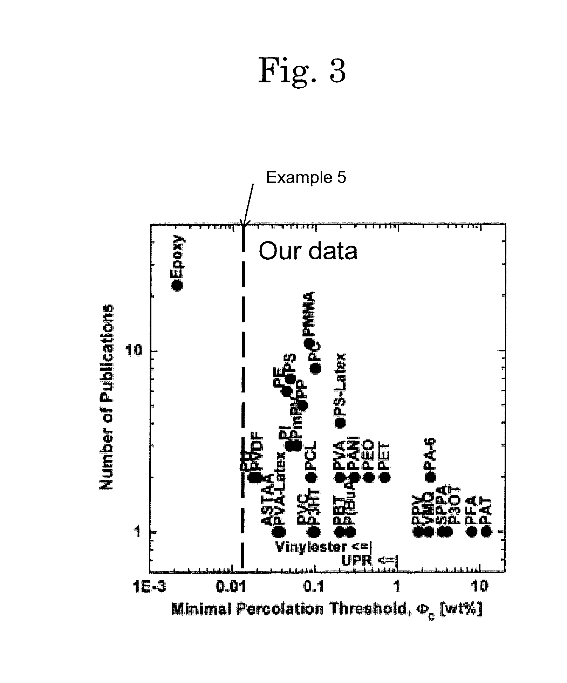

The percolation threshold can be found as follows, for example. Variant p' is subtracted from the CNT concentration p to find (p-p'). The value of p' when the residual of proximate straight line of the logarithm of the conductivity S, namely, logS, is minimum is set as the percolation threshold p_{c}. In examples 4 and 5 described later, the percolation threshold of the carbon nanotube composite material according to the present invention is 0.048% by weight, which is significantly lower than the percolation threshold conventionally reported. FIG.3 shows, in comparison, the percolation threshold of a carbon nanotube composite material reported in past literature (J. Kovacs and W. Bauhofer, Composite Science and Technology 69, 1486-1498 (2009)) and the percolation values of the present invention. It is seen that the carbon nanotube composite material according to the present invention has a significantly lower percolation threshold as compared with the conventional carbon nanotube composite material.

The percolation threshold of the carbon nanotube composite material 100 according to the present invention is preferably 0.0001% by weight or greater, and 0.2% by weight or less, more preferably 0.1% by weight or less, and still more preferably 0.05% by weight or less.

### [Fractal dimension]

As described above, when a cross-section of the carbon nanotube composite material 100 according to the present invention is observed, it is seen that the CNT groups 15 contain the carbon nanotubes 10 dispersed in the matrix 30 non-uniformly. The CNT groups 15 having such a non-uniform planar shape can be defined by a fractal dimension analysis. In the carbon nanotube composite material 100 in an embodiment of the present invention, the CNT groups 15 each have a fractal dimension of 1.7 or greater.

The above-described percolation theory has proved that the fractal dimension of a cluster having an infinite size is 91/48 (1.895) in two dimensions. The fractal dimension of such a cluster is considered to be 2.5 in three dimensions. When a cross-section of the carbon nanotube composite material 100 according to the present invention is observed, it is seen that carbon nanotubes having a high aspect ratio contact each other efficiently to form a continuous conductive path. Therefore, the fractal dimension of the conductive area is close to 1.895, which is a fractal dimension at which a cluster having an infinite size in two dimensions is formed.

Accordingly, since the carbon nanotube composite material 100 in an embodiment of the present invention contains the carbon nanotubes 10 having a high aspect ratio, a continuous conductive path is formed. Therefore, the CNT groups 15 have a fractal dimension of 1.66 or greater and more preferably 1.7 or greater, and thus provide conductivity, with a small amount of carbon nanotubes.

In this embodiment, the fractal dimension analysis can be performed on an optical microscopic image of a cross-section of the carbon nanotube composite material 100 by use of ImageJ, which is open source image processing software, and FracLac, which is a fractal analyzing plug-in thereof. The fractal dimension analysis is performed as follows. First, the microscopic image as the analysis target is binarized by use of ImageJ. Then, the binarized image is processed with a Local Connected Fractal Dimension (LCFD) analysis by use of FracLac 2.5 Release 1d. The analysis parameters are: Minimum Bin=0, Maximum Bin=2, Bin Size for Frequency Distribution=0.0133.

### [Conductivity of the carbon nanotube composite material]

The carbon nanotube composite material 100 according to the present invention has a conductivity of 10⁻¹¹ S/cm or greater, more preferably 10⁻¹⁰ S/cm or greater, still more preferably 10⁻⁹ S/cm or greater, still more preferably 10⁻⁷ S/cm or greater, still more preferably 10⁻⁶ S/cm or greater, still more preferably 10⁻⁵ S/cm or greater, and still more preferably 10⁻⁴ S/cm or greater. There is no specific upper limit on the conductivity of the carbon nanotube composite material, but it is difficult that the conductivity exceeds 10⁵ S/cm, which is the conductivity of carbon.

### [Amount of the carbon nanotubes]

A preferable amount of the carbon nanotubes in the carbon nanotube composite material 100 according to the present invention is as follows. From the viewpoint of not spoiling the physical properties of the basic material (matrix), the preferable amount of the carbon nanotubes is 0.0001% by weight or greater where the mass of the entirety of the carbon nanotube composite material is 100% by weight, in order to make the amount of the carbon nanotubes larger than the percolation threshold. From the viewpoint of not spoiling the physical properties of the basic material (matrix), the preferable amount of the carbon nanotubes is 5% by weight or less, more preferably 1% by weight or less, still more preferably 0.5% by weight or less, still more preferably 0.2% by weight or less, and still more preferably 0.1% by weight or less. When the amount of the carbon nanotubes exceeds 5% by weight, there is no basic material area 35 where the carbon nanotubes in the carbon nanotube composite material according to the present invention are not observed.

### [Conductivity of the carbon nanotube composite material and the amount of the carbon nanotubes]

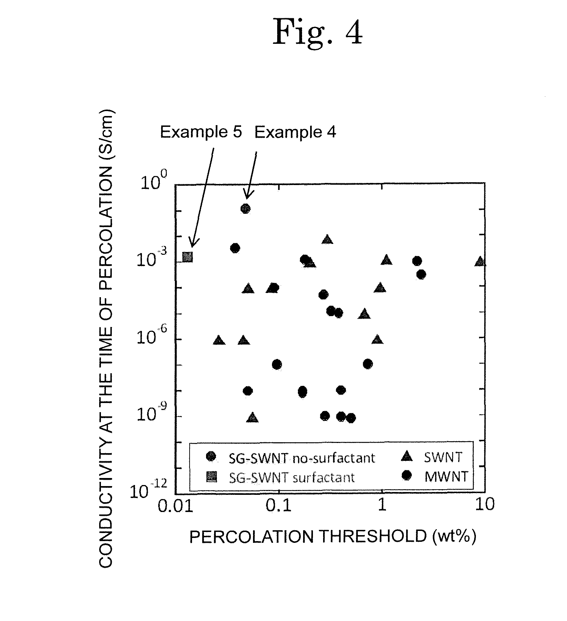

As shown in FIG. 4, the carbon nanotube composite material 100 according to the present invention has a high conductivity with a small amount of carbon nanotubes. In general, it is extremely difficult to produce a conductive composite material having a high conductivity with a small amount of carbon nanotubes. FIG. 4 shows the amount of the carbon nanotubes to be the percolation threshold of each carbon nanotube composite material 100 produced by a method according to the present invention, and the conductivity at each level of the percolation threshold. and ○ represent other examples of single-walled carbon nanotubes and multi-walled carbon nanotubes reported in past literature. As is clear from the figure, the carbon nanotube composite material 100 produced by the method according to the present invention has features of exhibiting a percolation threshold with a significantly smaller amount of carbon nanotubes as compared with the other examples, and having a significantly higher conductivity at each level of the percolation threshold as compared with the other examples.

The carbon nanotube composite material 100 according to the present invention preferably has a conductivity of 10⁻⁷ S/cm or greater at an amount of carbon nanotubes of 1% by weight or less, more preferably has a conductivity of 10⁻⁴ S/cm or greater at an amount of carbon nanotubes of 1% by weight or less or a conductivity of 10⁻⁷ S/cm or greater at an amount of carbon nanotubes of 0.5% by weight or less, still more preferably has a conductivity of 10⁻⁴ S/cm or greater at an amount of carbon nanotubes of 0.5% by weight or less, still more preferably has a conductivity of 10⁻⁷ S/cm or greater at an amount of carbon nanotubes of 0.2% by weight or less, still more preferably has a conductivity of 10⁻⁴ S/cm or greater at an amount of carbon nanotubes of 0.2% by weight or less, still more preferably has a conductivity of 10⁻⁷ S/cm or greater at an amount of carbon nanotubes of 0.1% by weight or less, and still more preferably has a conductivity of 10⁻⁷ S/cm or greater at an amount of carbon nanotubes of 0.05% by weight or less.

A conductive composite material having such a high conductivity with such a small amount of carbon nanotubes is obtained by the present invention for the first time.

### [Retaining the physical properties of the basic material]

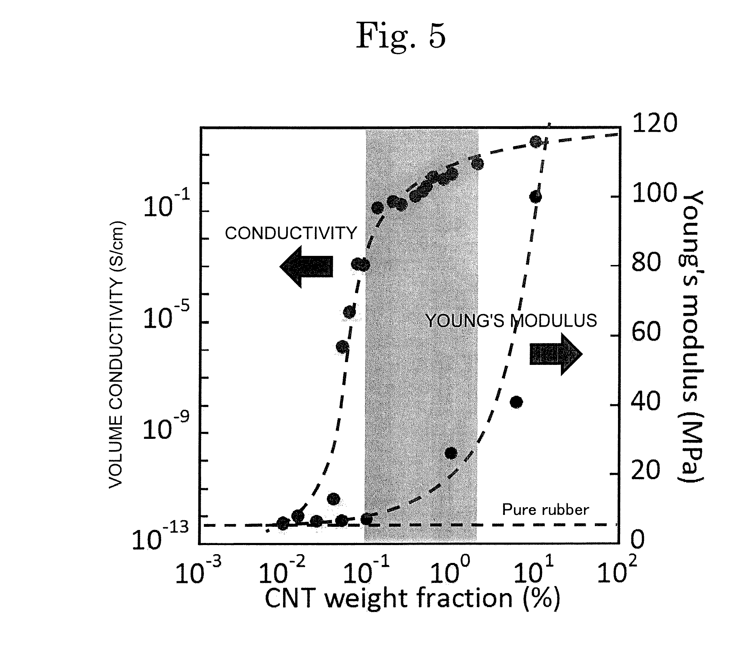

The carbon nanotube composite material 100 according to the present invention has a low percolation threshold and the basic material areas. Therefore, the carbon nanotube composite material 100 according to the present invention has a feature of retaining the physical properties of the basic material while containing carbon nanotubes in an amount that provides conductivity. FIG. 5 shows the conductivity and the Young's modulus of a fluorocarbon rubber composite material which are changed in accordance with the amount of CNTs. The conductivity of the CNT composite material starts rising when the CNT amount is about 2 x 10⁻²% by weight, whereas the Young's modulus starts rising when the CNT amount is about 10% by weight. This indicates that while the CNT amount is between 2 x 10⁻²% by weight and 10% by weight, the CNT composite material does not lose the flexibility inherent to the rubber while having conductivity.

In a conductive composite material produced by the conventional art, when an amount of filler that provides conductivity is incorporated into the basic material, the basic material is hardened, namely, the physical properties of the basic material are spoiled. The above-described effect of the present invention is significantly different from such a loss of the physical properties, and is provided by the present invention for the first time.

### [Conductivity of the carbon nanotubes]

The carbon nanotubes used for the carbon nanotube composite material according to the present invention have a conductivity of 1 S/cm or greater, more preferably 10 S/cm or greater, and still more preferably 50 S/cm or greater. Carbon nanotubes having such a conductivity are preferable to provide a carbon nanotube composite material having a high conductivity. There is no specific upper limit on the conductivity of the carbon nanotubes, but it is difficult that the conductivity exceeds 10⁵ S/cm, which is the conductivity of carbon.

### [Properties of the carbon nanotubes]

The properties of the carbon nanotubes used for the carbon nanotube composite material according to the present invention can be evaluated in the state where only carbon nanotubes are extracted from the carbon nanotube composite material and formed into, for example, Buckypaper. Extraction may be performed by appropriate known means such as dissolving the matrix by use of a solvent. The carbon nanotubes used for the carbon nanotube composite material according to the present invention each have a length of 0.1 µm or greater, more preferably 0.5 µm or greater, and still more preferably 1 µm or greater. Such carbon nanotubes have a high aspect ratio and contact each other efficiently, and therefore can form a continuous conductive path with a small amount.

The carbon nanotubes used for the carbon nanotube composite material according to the present invention have an average diameter of 1 nm or greater and 30 nm or less, and more preferably 1 nm or greater and 10 nm or less. When the average diameter is too short, the carbon nanotubes aggregate too strongly and are not dispersed. By contrast, when the average diameter is too long, the contact resistance between the carbon nanotubes is increased, which inhibits the formation of a conductive path having a high conductivity. The average diameter of the carbon nanotubes used for the carbon nanotube composite material according to the present invention is found as follows. Based on an image, obtained by a transmissive electron microscope (hereinafter, referred to as a "TEM"), of an agglomerate of aligned carbon nanotubes which are before being dispersed in a matrix, the outer diameter, namely, the diameter, of each carbon nanotube is measured and a histogram is created. The average diameter is found from the histogram.

The carbon nanotubes used for the carbon nanotube composite material according to the present invention preferably have a carbon purity, found by an analysis performed by use of fluorescence X rays, of 90% by weight or greater, more preferably 95% by weight or greater, and still more preferably 98% by weight or greater. Carbon nanotubes having such a high purity do not contain a large amount of impurities, which do not much contribute to the formation of a conductive path. Therefore, such carbon nanotubes are preferable to provide a high conductivity with a small amount. The carbon purity indicates the percentage of carbon weight with respect to the weight of the carbon nanotubes. The carbon purity of the carbon nanotubes used for the carbon nanotube composite material according to the present invention is obtained by an element analysis performed by use of fluorescence X rays.

### [G/D ratio of resonance Raman scattering measurement]

The carbon nanotubes used for the carbon nanotube composite material according to the present invention preferably have a G/D ratio of 3 or greater where G is the maximum peak intensity in the range of 1560 cm⁻¹ or greater and 1600 cm⁻¹ or less of a spectrum obtained by resonance Raman scattering measurement, and D is the maximum peak intensity in the range of 1310 cm⁻¹ or greater and 1350 cm⁻¹ or less in the spectrum.

### [Raman spectrum in RBM]

A carbon nanotube composite material containing carbon nanotubes for which at least one peak is observed in each of areas 110±10 cm⁻¹, 190±10 cm⁻¹ and 200 cm⁻¹ or greater by a Raman spectroscopic analysis performed at a wavelength of 633 nm is preferable to provide the effect of the present invention. The structure of the carbon nanotubes can be evaluated by a Raman spectroscopic analysis. Various wavelengths may be used by the Raman spectroscopic analysis. Herein, wavelengths of 532 nm and 633 nm are used. An area of 350 cm⁻¹ or less in the Raman spectrum is called "radial breathing mode" (hereinafter, referred to as "RBM"). A peak observed in this area is correlated with the diameter of the carbon nanotubes.

When the carbon nanotubes according to the present invention are subjected to a Raman spectroscopic analysis performed at a wavelength of 633 nm, at least one peak is observed in each of areas of 110±10 cm⁻¹, 190±10 cm⁻¹ and 200 cm⁻¹ or greater. Such carbon nanotubes have a plurality of diameters significantly different from each other. Therefore, the interaction to form and retain the bundle of carbon nanotubes is relatively weak. This allows the carbon nanotubes to be dispersed in a matrix easily. Thus, a carbon nanotube composite material having a high conductivity can be obtained with a small amount of carbon nanotubes.

Regarding carbon nanotubes used for the carbon nanotube composite material according to the present invention, the quality is higher and the conductivity is higher as the number of defects of the graphene sheet thereof is smaller. The defects of the graphene sheet can be evaluated by a Raman spectroscopic analysis. Various wavelengths may be used by the Raman spectroscopic analysis. Herein, wavelengths of 532 nm and 633 nm are used. In a Raman spectrum, a Raman shift seen in the vicinity of 1590 cm⁻¹ is derived from graphite and thus is called a "G band", whereas a Raman shift seen in the vicinity of 1350 cm⁻¹ is derived from amorphous carbon or graphite defect and thus is called a "D band". In order to measure the quality of the carbon nanotubes, the height ratio of G/D (G/D ratio) obtained by the Raman spectroscopic analysis is used. A carbon nanotube having a higher G/D ratio has a higher graphitization degree and thus a higher quality. In order to evaluate the Raman G/D ratio, a wavelength of 532 nm is used. A higher G/D is better. A carbon nanotube contained in a conductive material that has a G/D ratio of 3 or greater is sufficiently conductive and is preferable to provide a carbon nanotube composite material having a high electric conductivity. The G/D ratio is preferably 4 or greater and 200 or less, and more preferably 5 or greater and 150 or less. The results of the Raman spectroscopic analysis may vary in accordance with sampling. Therefore, at least three different areas are subjected to the Raman spectroscopic analysis, and the arithmetic mean thereof is found.

### [Single-walled carbon nanotubes]

The carbon nanotubes used for the carbon nanotube composite material according to the present invention are preferably single-walled carbon nanotubes. Single-walled carbon nanotubes have a lower density than multi-walled carbon nanotubes and thus are longer per weight, and therefore are preferable to provide a high conductivity with a small amount.

### [Matrix]

The matrix used for the carbon nanotube composite material according to the present invention is preferably an elastomer because an elastomer is highly deformable. An elastomer applicable for the carbon nanotube composite material according to the present invention may be, from the viewpoints of flexibility, conductivity and durability, at least one selected from, for example, elastomers including natural rubber (NR), epoxidized natural rubber (ENR), styrene-butadiene rubber (SBR), nitrile rubber (NBR), chloroprene rubber (CR), ethylenepropylene rubber (EPR, EPDM), butyl rubber (IIR), chlorobutyl rubber (CIIR), acrylic rubber (ACM), silicone rubber (Q), fluorocarbon rubber (FKM), butadiene rubber (BR), epoxidized butadiene rubber (EBR), epichlorohydrin rubber (CO, CEO), urethane rubber (U), polysulfide rubber (T); and olefin-based thermoplastic elastomer (TPO), polyvinyl chloride-based thermoplastic elastomer (TPVC), polyester-based thermoplastic elastomer (TPEE), polyurethane-based thermoplastic elastomer (TPU), polyamide-based thermoplastic elastomer (TPEA), styrene-based thermoplastic elastomer (SBS) and the like. A copolymer, a modified material, and a mixture of two or more of these may be used. Among these materials, a highly polar elastomer which easily generate a free radical when being kneaded, for example, natural rubber (NR), nitrile rubber (NBR) and the like are especially preferable. The elastomer used for the carbon nanotube composite material according to the present invention may be obtained by crosslinking at least one selected from the group of the above-listed materials.

The matrix used for the carbon nanotube composite material according to the present invention may be a resin. A resin applicable for the carbon nanotube composite material according to the present invention may be a thermosetting resin or a thermoplastic resin. Examples of usable thermosetting resins include unsaturated polyester, vinyl ester, epoxy, phenol (resol type), urea-melamine, polyimide and the like; and copolymers, modified materials and blends of two or more of these resins. In order to improve the impact resistance, an elastomer or a rubber component may be added to the above-described resins. Examples of usable thermoplastic resins include polyesters including polyethylene terephthalate (PET), polybutylene terephthalate (PBT), polytrimethylene terephthalate (PTT), polyethylene naphthalate (PEN), liquid crystal polyester and the like; polyolefins including polyethylene (PE), polypropylene (PP), polybutylene and the like; styrene-based resins; polyoxymethylene (POM); polyamide (PA); polycarbonate (PC); polymethylenemethacrylate (PMMA); polyvinylchloride (PVC); polyphenylenesulfide (PPS); polyphenyleneether (PPE); modified PPE; polyimide (PI); polyamideimide (PAI); polyetherimide (PEI); polysulfone (PSU); polyethersulfone; polyketone (PK); polyetherketone (PEK); polyetheretherketone (PEEK); polyetherketoneketone (PEKK); polyarylate (PAR); polyethernitrile (PEN); phenol-based resins; phenoxy resins; and fluiorine-based resins including polytetrafluoroethylene and the like.

The matrix used for the carbon nanotube composite material according to the present invention is especially preferably formed of a fluorocarbon resin or fluorocarbon rubber because CNTs have a high affinity with a fluorocarbon resin and thus can be well dispersed. Preferably usable fluorocarbon resins include polytetrafluoroethylene, vinylidene polychlorotrifluoroethylenepolyfluoride, vinyl polyfluoride, perfluoroalcoxy fluorocarbon resins, ethylene tetrafluoride-propylene hexafluoride copolymer, ethylene-ethylene tetrafluoride copolymer, ethylene-chlorotrifluofoethylene copolymer, and a mixture thereof.

A usable crosslinker varies in accordance with the type of the above-described elastomer, and may be, for example, an isocyanate group-containing crosslinker (isocyanate, block isocyanate, etc.), a sulfur-containing crosslinker (sulfur, etc.), a peroxide crosslinker (peroxide, etc.), a hydrosylyl group-containing crosslinker (hydrosylyl curing agent), a urea resin such as melamine or the like, an epoxy curing agent, a polyamine curing agent, or an optical crosslinker that generates a radical by energy of ultraviolet, electron beams or the like. These may be used independently or as a combination of two or more thereof.

The carbon nanotube composite material according to the present invention may contain, for example, an ion conductor (surfactant, ammonium salt, inorganic salt), a plasticizer, an oil, a crosslinker, a crosslinking promoter, an age resister, a flame retardant, a colorant or the like in addition to the above-described components.

### [Use of the carbon nanotube composite material]

The carbon nanotube composite material according to the present invention has a high conductivity and does not spoil the properties inherent to the matrix, and therefore is usable as an antistatic material or the like.

### [Production method]

Hereinafter, a method for producing the carbon nanotube composite material according to the present invention will be described. The carbon nanotube composite material according to the present invention is obtained by dispersing carbon nanotubes having the above-described properties in a matrix.

### [Production of carbon nanotubes]

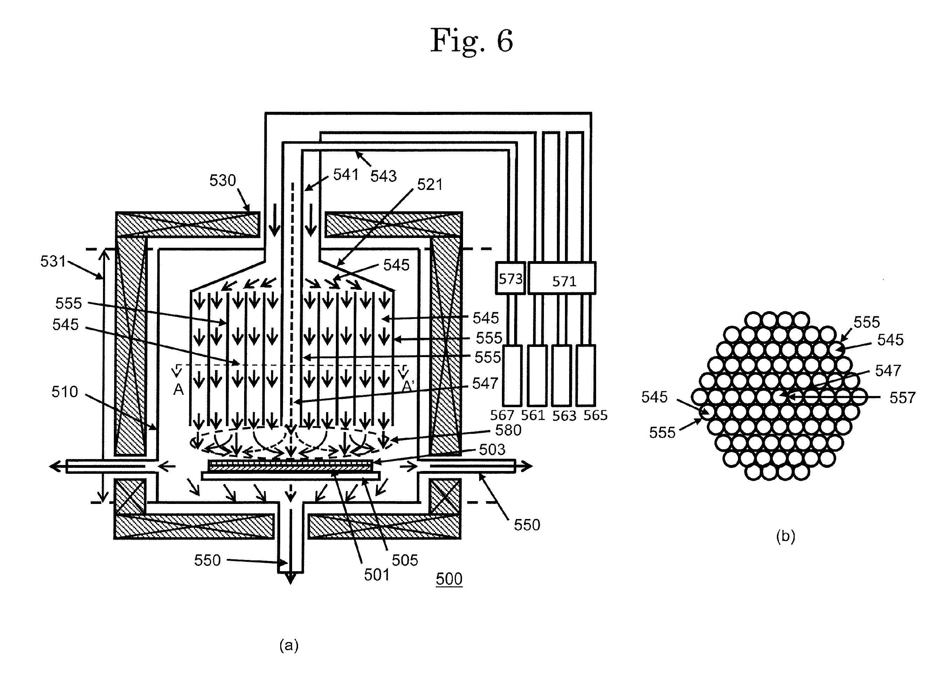

The carbon nanotubes used for the carbon nanotube composite material according to the present invention can be produced by a chemical vapor deposition method by use of a production apparatus 500 shown in FIG. 6. According to the method of the present invention, first gas containing source gas and second gas containing a catalyst activator are supplied from different gas supply pipes from each other and caused to flow in gas supply paths formed of different pipes in a heating area. Because of this structure, the source gas and the catalyst activator are not mixed together before reaching an area in the vicinity of a catalyst layer, and the first gas and the second gas are mixed and reacted with each other in the vicinity of the catalyst layer and the mixture contacts the catalyst layer. This process is highly efficient, and the growth, which is usually deactivated in about 10 minutes, can be continued for a long time duration. As a result, very long and highly pure single-walled carbon nanotubes can be synthesized. This method is preferable to provide the composite material according to the present invention.

First, a substrate 501 (e.g., silicon wafer) having a catalyst layer 503 (e.g., alumina-iron thin film) formed thereon in advance are placed on a substrate holder 505. A synthesis furnace 510 is filled with atmospheric gas (e.g., helium) supplied from a first gas supply pipe 541 via a first gas flow path 545. The substrate 501 is located such that a surface of the catalyst layer 503 is generally perpendicular to the first gas flow path 545 and a second gas flow path 547, so that the source gas is supplied to the catalyst efficiently.

Next, reduction gas (e.g., hydrogen) is supplied into the synthesis furnace 510 from the first gas supply pipe 541 via the first gas flow path 545 while the synthesis furnace 510 is heated to have a predetermined temperature (e.g., 750°C). This state is kept for a desired time duration.

The catalyst layer 503 is reduced by the reduction gas to become microparticles having various sizes and thus is adjusted to be in a state preferable as a catalyst of carbon nanotubes.

Next, the supply of the reduction gas and the atmospheric gas from the first gas flow path 545 is stopped or decreased when desired (reaction condition), and the source gas and the catalyst activator are supplied from different pipes from each other provided in the synthesis furnace 510 to a gas mixture area 580 in the vicinity of the catalyst layer 503. Namely, the source gas (e.g., ethylene) and the first gas containing the atmospheric gas are supplied into the synthesis furnace 510 from the first gas supply pipe 541 via the first gas flow path 545, and the second gas containing the catalyst activator (e.g., water) is supplied into the synthesis furnace 510 from a second gas supply pipe 543 via the second gas flow path 547. These different types of gas supplied from the first gas flow path 545 and the second gas flow path 547 form a gas flow generally parallel to the surface of the catalyst layer 503 on the substrate 1, then are mixed in the gas mixture area 580 in the vicinity of the catalyst layer 503, and are supplied in a predetermined amount onto the surface of the catalyst layer 503 on the substrate 501.

The source gas contained in the first gas is progressively decomposed while passing in the first flow path 545, and put into a state preferable for the production of the carbon nanotubes. The catalyst activator is supplied from the second gas flow path 547 and thus does not react with the source gas. A predetermined amount of such catalyst activator is supplied to the gas mixture area 580. In this manner, the first gas and the second gas which are in such an optimal state are mixed together in the gas mixture area 580 and contact the catalyst layer 503. This process is highly efficient, and the growth, which is usually deactivated in about 10 minutes, can be continued for a long time duration. As a result, a carbon nanotube agglomerate formed of very long and highly pure single-walled carbon nanotubes can be produced from the catalyst layer attached to the substrate 501 efficiently at a high speed and a high yield.

After the carbon nanotubes are produced, only the atmospheric gas is caused to flow from the first gas flow path 545 in order to suppress attachment, to the carbon nanotube agglomerate, of the source gas contained in the first gas, the catalyst activator contained in the second gas and decomposed components thereof which remain in the synthesis furnace 510, carbon impurities present in the synthesis furnace 510, and the like.

In a cooling gas environment, the carbon nanotube agglomerate, the catalyst and the substrate 501 are cooled down preferably to 400°C or lower, and more preferably to 200°C or lower. As cooling gas, inert gas supplied from the second gas supply pipe 43 is preferable. Especially nitrogen is preferable from the viewpoints of safety, economy, and purgeability. The carbon nanotubes used for the carbon nanotube composite material according to the present invention can be produced in this manner.

### [Substrate (substrate plate)]

The substrate 501 (substrate plate) is a member capable of carrying the catalyst having a surface on which the carbon nanotubes are to be grown. The substrate 501 may be formed of any appropriate material that can maintain the shape thereof at a high temperature of 400°C or higher.

The substrate 501 preferably has a planar form, for example, is a flat plate or the like in order to produce a large amount of carbon nanotubes by use of the effect of the present invention.

### [Catalyst]

The catalyst layer 503 may be formed of any appropriate catalyst that has been actually used to produce carbon nanotubes in the past. Specifically, usable catalysts include iron, nickel, cobalt, molybdenum, a chloride thereof, an alloy thereof, a composite and a multiple layer containing any of these substances and aluminum, alumina, titania, titanium nitride or silicon oxide.

The catalyst may be used in an amount in the range that has been actually used to produce carbon nanotubes in the past. In the case where, for example, a metal thin film of iron or nickel is used, the thickness of the thin film is preferably 0.1 nm or greater and 100 nm or less, more preferably 0.5 nm or greater and 5 nm or less, and especially preferably 0.8 nm or greater and 2 nm or less.

### [Reduction gas]

The reduction gas is gas having at least one of the effects of reducing the catalyst, promoting the catalyst to be put into microparticles in a state suitable to the growth of the carbon nanotube tubes, and improving the activity of the catalyst. Gas applicable as the reduction gas may be, for example, hydrogen, ammonia, water, or mixed gas thereof, which has been actually used to produce carbon nanotubes in the past.

### [Inert gas (atmospheric gas)]

The atmospheric gas (carrier gas) for the chemical vapor deposition may be any gas that is inert at a growth temperature of the carbon nanotubes and does not react with the growing carbon nanotubes. Preferable gas may be, for example, nitrogen, helium, argon, hydrogen or mixed gas thereof, which has been actually used to produce carbon nanotubes in the past.

### [Source (source gas)]

The source used to produce the carbon nanotubes may be any appropriate substance that has been actually used to produce carbon nanotubes in the past. Preferable source gas is hydrocarbon such as methane, ethane, propane, butane, pentane, hexane, heptane, propylene, ethylene, butadiene, polyacetylene, acetylene or the like.

### [Addition of the catalyst activator]

During the step of growing the carbon nanotubes, the catalyst activator is added. The addition of the catalyst activator extends the life of the catalyst and raises the activity of the catalyst, and as a result, can raise the productivity of the carbon nanotubes and promote the purification. The catalyst activator may be any substance that has an oxidation capability such as oxygen or sulfur and does not cause much damage to the carbon nanotubes at a growth temperature thereof. Preferable catalyst activators include water, oxygen, carbon dioxide, carbon monoxide, ethers, alcohols and the like. Water, which is available very easily, is especially preferable.

### [Conditions for the catalyst activator and the source]

For producing the carbon nanotubes by using the catalyst activator and the source during the growth step at a high efficiency, it is preferable that (1) the source contains carbon but does not contain oxygen and (2) the catalyst contains oxygen. As described above, the first gas containing the source gas is supplied into the synthesis furnace 510 via the first gas flow path 545, and the second gas containing the catalyst activator (e.g., water) is supplied into the synthesis furnace 510 via the second gas flow path 547. Because of this arrangement, the source gas is progressively decomposed while passing in the first gas flow path 545, and put into a state preferable for the production of the carbon nanotubes. The catalyst activator is supplied from the second gas flow path 547 and thus does not react with the source gas. A predetermined amount of such a catalyst activator is supplied to the gas mixture area 580. The first gas and the second gas which are in such an optimal state are mixed together in the gas mixture area 580 and contact the catalyst layer 503. This process is highly efficient, and the growth, which is usually deactivated in about 10 minutes, can be continued for a long time duration. Therefore, very long and highly pure single-walled carbon nanotubes can be synthesized, which is preferable to produce the composite material according to the present invention.

### [Reaction temperature]

The temperature at which the carbon nanotubes are grown is preferably 400°C or higher and 1000°C or lower. When the temperature is lower than 400°C, the effect of the catalyst activator is not expressed; whereas when the temperature exceeds 1000°C, the catalyst activator reacts with the carbon nanotubes.

### [Dispersion of the carbon nanotubes]

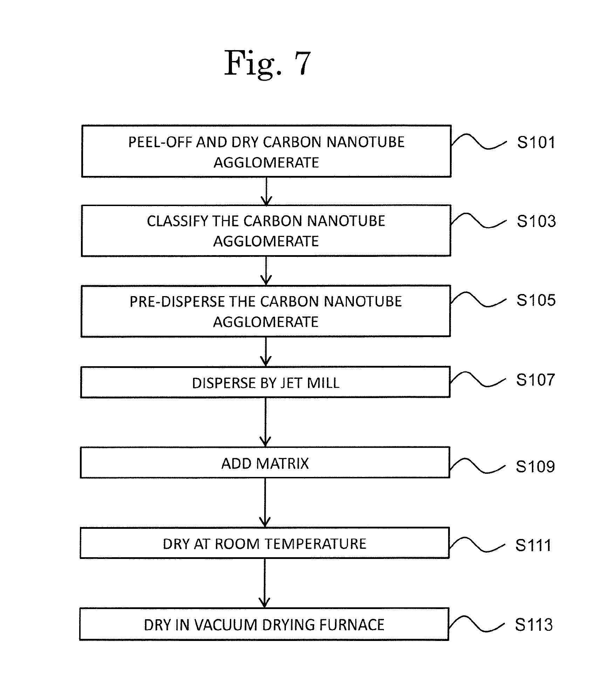

Next, a method for producing the carbon nanotube composite material by use of the resultant carbon nanotube agglomerate will be described with reference to FIG. 7. The carbon nanotube agglomerate is peeled off from the substrate 501 by a physical, chemical or mechanical method (S101). Applicable peeling methods include, for example, a method of peeling off the carbon nanotube agglomerate by use of an electric field, a magnetic field, a centrifugal force and a surface tension, a method of mechanically peeling off the carbon nanotube agglomerate directly from the substrate 501, a method of peeling off the carbon nanotube agglomerate from the substrate 501 by use of pressure or heat, and the like. Preferable methods includes a method of peeling off the carbon nanotube agglomerate from the substrate 501 by use of a thin cutting tool such as a cutter blade or the like and a method of sucking the carbon nanotube agglomerate by use of a vacuum pump to peel off the carbon nanotube agglomerate from the substrate 501.

The peeled-off carbon nanotube agglomerate is subjected to a drying step (S101). The drying step raises the dispersibility and thus is preferable for the production of the carbon nanotube composite material according to the present invention. The carbon nanotubes which form the carbon nanotube agglomerate used for the carbon nanotube composite material according to the present invention easily absorb moisture in the atmosphere into a space thereamong while being stored in the atmosphere or transported. In such a state of retaining moisture, the carbon nanotubes are stuck to each other by a surface tension of water and are difficult to be unbound. Thus, the carbon nanotubes are not well dispersed in the matrix. The drying step performed before a dispersion step removes the moisture contained in the carbon nanotubes and thus can raise the dispersibility thereof into the dispersion medium. For the drying step, heat drying or vacuum drying, for example, may be used. Heat and vacuum drying is preferably usable.

It is preferable that the peeled-off carbon nanotube agglomerates are classified in a classification step (S103). In the classification step, the carbon nanotube agglomerates are put into a size in a predetermined range, so that carbon nanotube agglomerates have a uniform size. The carbon nanotube agglomerates peeled off from the substrate 501 include a large clump-like synthesis product. Such a carbon nanotube agglomerate having a large size has a different dispersibility, and inhibits production of a stable dispersion solution. Therefore, the carbon nanotube agglomerates are caused to pass through a net, filter, meshed member or the like to exclude the large clump-like carbon nanotube agglomerates, so that only the carbon nanotube agglomerates which have passed the net, filter, meshed member or the like are used for the following steps. This is preferable to provide a stable carbon nanotube dispersion solution.

It is preferable that such a carbon nanotube agglomerate obtained as a result of the classification is subjected to a pre-dispersion step (S105). In the pre-dispersion step, the carbon nanotube agglomerate is stirred and dispersed in a solvent. As described later, the carbon nanotubes used for the carbon nanotube composite material according to the present invention is preferably dispersed by use of a jet mill. The pre-dispersion step prevents the jet mill from being clogged with the carbon nanotubes and also can raise the dispersibility of the carbon nanotubes. For the pre-dispersion step, a stirrer is preferably used.

The dispersion solution of the carbon nanotube agglomerate which has processed with the pre-dispersion step is subjected to a dispersion step (S107). For the dispersion step of dispersing the carbon nanotube agglomerate in the dispersion solution, it is preferable to disperse the carbon nanotubes by use of a shearing stress and to use a jet mill. A wet type jet mill is especially preferable. The wet type jet mill squeezes out the mixture in the solvent as a high speed flow through a nozzle located in a sealed state in a pressure resistant container. The carbon nanotubes are dispersed in the pressure resistant container by collision of opposing flows, collision against walls of the container, turbulence caused by the high speed flow, shear flow or the like. In the case where Nano Jet Pul (JN10, JN100, JN100) produced by JOKOH Co., Ltd. is used as the wet type jet mill, the processing pressure in the dispersion step is preferably in the range of 10 MPa or greater and 150 MPa or less.

The carbon nanotube dispersion solution containing carbon nanotubes dispersed therein in this manner has a high dispersibility and is stable while having the high electric properties, heat conductivity and mechanical properties of the carbon nanotubes.

Next, a matrix solution containing the matrix in a solvent is prepared. The matrix solution is added to the carbon nanotube dispersion solution and fully stirred, so that the carbon nanotubes are dispersed in the matrix (S109). As described above, in the case of the carbon nanotube composite material according to the present invention, the carbon nanotube dispersion solution and the matrix solution are mixed together such that the carbon nanotubes are contained at 0.0001% by weight or greater and 5% by weight or less, and more preferably 0.005% by weight or greater and 2% by weight or less, where the mass of the entirety of the carbon nanotube composite material is 100% by weight.

The fully mixed solution is poured into a container such as a laboratory dish or the like and dried at room temperature to solidify the carbon nanotube composite material (S111).

The solidified carbon nanotube composite material is put into a vacuum drying furnace to be dried and the solvent is removed (S113). The drying temperature is a temperature at which the solvent can be sufficiently removed from the carbon nanotube composite material and the matrix is not deteriorated. Therefore, the drying temperature may be varied in accordance with the type of matrix used for the carbon nanotube composite material. The drying temperature is, for example, about 80°C. At this temperature, the solvent can be sufficiently removed and the matrix is not deteriorated.

### [Solvent]

As a dispersion medium and a solvent used for dissolving the matrix which are used for the carbon nanotube composite material according to the present invention, any organic solvent that can dissolve the matrix is usable. An appropriate solvent can be selected in accordance with the matrix used. Usable solvents include, for example, toluene, xylene, acetone, carbon tetrachloride and the like. Especially as the solvent used for the carbon nanotube composite material according to the present invention, because many types of rubber containing fluorocarbon rubber and silicone rubber can be dissolved the matrix, Methylisobutylketone (hereinafter, referred to as "MIBK"), which is a good solvent for carbon nanotubes, is preferable.

A disperser may be added to the carbon nanotube dispersion solution. The disperser is useful to improve the dispersion capability, dispersion stabilizing capability and the like of the carbon nanotubes.

In this manner, the carbon nanotube composite material according to the present invention exhibiting a high conductivity with a small amount of carbon nanotubes can be produced.

### EXAMPLES

### (Example 1)

### [Production of carbon nanotube agglomerate]

A carbon nanotube agglomerate was produced by use of the production apparatus 500 shown in FIG. 6. In this example, as a vertical type synthesis furnace 510, a quartz pipe having a cylindrical shape or the like was used. The substrate holder 505 formed of quartz is provided at a position downstream by 20 mm with respect to a horizontal position in a central part of the production apparatus 500. Heating means 530 formed of a resistance heating coil and provided to so as to surround the synthesis furnace 510, and heating temperature adjustment means, are provided to define a heating area 31 in the synthesis furnace 510 heated to a predetermined temperature.

Gas flow formation means 521 that has a cylindrical, flat hollow structure having a diameter of 78 mm and is formed of a heat-resistant Inconel alloy 600 is provided at an end of the first gas supply pipe 541 that is inside the synthesis furnace 510, such that the gas flow formation means 521 is communicated and connected to the first gas supply pipe 541. The first gas supply pipe 541 is communicated and connected to a central part of the gas flow formation means 521. The gas flow formation means 521 is located on a plane generally parallel to the surface of the catalyst layer on the substrate 501, such that the center of the substrate 501 matches the center of the gas flow formation means 521. In this example, the gas flow formation means 521 has a hollow cylindrical shape having, for example, a top end diameter of 22 mm and a bottom end diameter of 78 mm. Four pipes 557 each having a diameter of 32 mm are connected. The second gas supply pipe 543, which is located such that the center thereof matches the center of the first gas supply pipe 541, is extended such that the center thereof matches the center of the gas flow formation means 521. An exit having a diameter of 13 mm is provided.

A connection part of the pipes 555 and 557 in the gas flow formation means 521 is distanced by 150 mm from the surface of the catalyst layer.

Now, a distance of 150 mm is intentionally provided between the gas flow formation means 521 and the surface of the catalyst, and the volumes of the first gas flow path 545 and the second first gas flow path 547 to be heated is increased. The first gas flow path 545 is connected to the gas flow formation means 521 and is provided with turbulence prevention means 523. The first gas flow path 545 includes four pipes 555 each having a diameter of 32 mm. The four pipes 555 are formed of the heat-resistant Inconel alloy 600 and are arranged to have a honeycomb structure. The second gas flow path 547 is provided with the pipe 557 having a diameter of 13 mm and located at a position matching the center of the four pipes 555.

First carbon weight flux adjustment means 571 is provided to connect a source gas cylinder 561 containing a carbon compound to be used as a source of the carbon nanotubes, an atmospheric gas cylinder 563 containing carrier gas for the source gas and the catalyst activator, and a reduction gas cylinder 563 containing reduction gas used to reduce the catalyst to a gas flow device. The first carbon weight flux adjustment means 571 supplies each type of gas to the first gas supply pipe 541 while controlling the supply amount of thereof independently to control the supply amount of the source gas. Second carbon weight flux adjustment means 573 is provided to connect a catalyst activator cylinder 567 to the gas follow device and to the second gas supply pipe 543 to control the supply amount of the catalyst activator.

As the substrate 1, a thermal oxide film-provided Si substrate (length: 40 mm x width: 40 mm) having a thickness of 500 nm was used. The thermal oxide film was obtained by sputtering Al₂O₃ as a catalyst to a thickness of 30 nm and Fe also as a catalyst to a thickness of 1.8 nm.

The substrate 501 was brought onto the substrate holder 508 located downstream by 20 mm with respect to a horizontal position in a central part of the heating area 531 of the synthesis furnace 502. The substrate was located horizontally. Because of this arrangement, the catalyst on the substrate and the flow path of the mixed gas are generally perpendicular to each other, and thus the source gas is supplied to the catalyst efficiently.

Next, while mixed gas (total flow rate: 2000 sccm) containing 200 sccm of He and 1800 sccm of H₂ was supplied as reduction gas from the first gas follow path 545, the temperature in the synthesis furnace 510 having an inner pressure of 1.02 x 10⁵ Pa was raised from room temperature to 830°C over 15 minutes by use of the heating means 530. Then, while 80 sccm of water was supplied as a catalyst activator from the second gas flow path 543, the substrate with the catalyst was heated for 3 minutes in the state of being kept at 830°C. As a result, the iron catalyst layer was reduced and promoted to become microparticles suitable to the growth of the single-walled carbon nanotubes. Thus, a great number of catalyst microparticles of different sizes but of the nanometer order were formed on an alumina layer.

Next, the temperature in the synthesis furnace 510 having an inner pressure of 1.02 x 10⁵ Pa (atmospheric pressure) was set to 830°C. In this state, He having a total flow rate ratio of 89% (1850 sccm) as atmospheric gas and C₂H₄ having a total flow rate ratio of 7% (150 sccm) as source gas were supplied from the first gas flow path 545 for 10 minutes, and H₂O-containing He (relative humidity: 23%) having a total flow rate ratio of 4% (80 sccm) was supplied as a catalyst activator from the second gas supply pipe 543 for 10 minutes.

Because of this step, a single-walled carbon nanotube was grown from each of the catalyst microparticles. As a result, an agglomerate of aligned single-walled carbon nanotubes was obtained. In this manner, single-walled carbon nanotubes were grown from the substrate 1 in an environment containing the catalyst activator.

After the growth step, only the atmospheric gas (total flow rate: 4000 sccm) was supplied from the first gas flow path 545 for three minutes to remove the residual source gas, generated carbon impurities and the catalyst activator.

After this, the substrate was cooled down to 400°C or lower. Then, the substrate was taken out from the synthesis furnace 510. Thus, a series of steps for producing the single-walled carbon nanotubes was completed.

### [Properties of the carbon nanotubes produced in Example 1]

The properties of the carbon nanotube agglomerate depend on the details of the production conditions. Under the production conditions in Example 1, the carbon nanotubes typically have a length of 100 µm and an average diameter of 3.0 nm.

### [Raman spectrum evaluation on the carbon nanotube agglomerate]

A Raman spectrum of the carbon nanotube agglomerate obtained in Example 1 was measured. A sharp G-band peak is observed in the vicinity of 1590 cm⁻¹. From this, it is understood that the carbon nanotubes which form the carbon nanotube agglomerate according to the present invention include a graphite crystalline structure.

A D-band peak, which is derived from a defect or the like, is observed in the vicinity of 1340 cm⁻¹. This indicates that the carbon nanotubes have a significant defect. A plurality of RBM modes, which are caused by a single-walled carbon nanotube, are observed on the low wavelength side (100 to 300 cm⁻¹). From this, it is understood that the graphite layer is formed of single-walled carbon nanotubes. The G/D ratio was measured to be 8.6.

### [Purity of the carbon nanotube agglomerate]

The carbon purity of the carbon nanotube agglomerate was found based on results of an element analysis performed by use of fluorescence X rays. The carbon nanotube agglomerate peeled off from the substrate was subjected to an element analysis by use of fluorescence X rays. The percentage by weight of carbon was measured to be 99.98% by weight, and the percentage by weight of iron was measured to be 0.013%. The percentage by weight of no other element was measured. From these results, the carbon purity was found to be 99.98%.

### [Dispersion of carbon nanotubes]

The obtained carbon nanotube agglomerate was collected as follows. The aligned carbon nanotube agglomerate was sucked and peeled off from the substrate 501 by use of a vacuum pump. The carbon nanotube agglomerate attached to the filter was collected. At this point, the aligned carbon nanotube agglomerate was dispersed. As a result, clump-like carbon nanotube agglomerates were obtained.

Next, the carbon nanotube agglomerates were put on one surface of a net having meshes of 0.8 mm and sucked by a vacuum cleaner from the other surface of the net. The carbon nanotube agglomerates which passed the meshes were collected. In this manner, large-sized clump-like carbon nanotube agglomerates were excluded from the above-obtained clump-like carbon nanotube agglomerates, namely, the clump-like carbon nanotube agglomerates were classified (classification step).

A carbon nanotube agglomerate thus obtained was measured by a Carl Fischer reaction method (coulometric titration-method trace moisture meter CA-200 produced by Mitsubishi Chemical Analytech Co., Ltd.). The carbon nanotube agglomerate was dried under predetermined conditions (kept at 200°C for 1 hour in vacuum) and then released from the vacuum environment in a glovebox in a dry nitrogen gas flow. About 30 mg of the carbon nanotube agglomerate was extracted and transferred into a glass boat of a moisture meter. The glass boat was moved to a vaporization device and heated at 150°C for 2 minutes therein. Moisture obtained by the vaporization during this time duration was transported by nitrogen gas and reacted with iodine by Carl Fischer reaction by a device located adjacent to the vaporization device. The amount of moisture was detected based on an amount of electricity which was required to generate the same amount of iodine consumed by the reaction. It was found by this method that the pre-drying carbon nanotube agglomerate contained 0.8% by weight of moisture. After the carbon nanotube agglomerate was dried, the moisture content of the carbon nanotube agglomerate was decreased to 0.3% by weight.

Accurately 100 mg of the carbon nanotube agglomerate obtained by the classification was measured out and put into a 100 ml flask (three necks; for vacuum; for temperature adjustment). The temperature was raised to 200°C in vacuum and then kept at this level for 24 hours. Then, the carbon nanotube agglomerate was dried. After the carbon nanotube agglomerate was dried, 20 ml of MIBK (methylisobutylketone) (produced by Sigma-Aldrich Japan) as a dispersion medium was injected into the flask in which the carbon nanotube agglomerate was still in the heated and vacuum-treated state, so that the carbon nanotube agglomerate would not contact the atmosphere (drying step).

The amount of MIBK (produced by Sigma-Aldrich Japan) was increased to 300 ml. A stirrer was put into the beaker, and the beaker was sealed with an aluminum foil so that MIBK would not volatilize. The substance in the beaker was stirred at room temperature for 24 hours at 600 rpm by the stirrer.

For the dispersion step, a wet type jet mill (Nano Jet Pul (registered trademark) JN10 produced by JOKOH Co., Ltd.) was used. The carbon nanotube agglomerate was caused to pass in a 200 µm flow path at a pressure of 600 MPa to be dispersed in MIBK. As a result, a carbon nanotube dispersion solution having a concentration by weight of 0.033% was obtained.

The dispersion solution was further stirred at room temperature for 24 hours by a stirrer. In this step, the temperature of the solution was raised to 70°C to volatilize MIBK so that about 150 ml of MIBK would be left. At this point, the concentration by weight of the carbon nanotubes was about 0.075% by weight (dispersion step). In this manner, the carbon nanotube dispersion solution according to the present invention was obtained.

In this example, fluorocarbon rubber (Daiel-G912 produced by Daikin Industries, Ltd.) was used as a matrix. 150 ml of the carbon nanotube dispersion solution was added to 50 ml of a solution of fluorocarbon rubber such that the content of the carbon nanotubes would be 1% where the mass of the entirety of the carbon nanotube composite material was 100% by weight. The solutions were stirred at room temperature for 16 hours under the condition of about 300 rpm by use of a stirrer and thus concentrated until the entire amount became about 50 ml.

The fully mixed solution was poured into a container such as a laboratory dish or the like and dried at room temperature for 12 hours to solidify the carbon nanotube composite material.

The solidified carbon nanotube composite material was put into a vacuum drying furnace of 80°C and dried over 24 hours to remove the solvent. In this manner, a carbon nanotube composite material 200 in Example 1 was obtained (the sample has a circular sheet-like shape having a diameter of 77 mm and a thickness of about 300 µm).

### (Example 2)

In Example 2, a carbon nanotube composite material 210 prepared such that the content of the carbon nanotubes would be 0.25% was obtained by substantially the same method as in Example 1.

### (Example 3)

In Example 3, a carbon nanotube composite material 220 prepared such that the content of the carbon nanotubes would be 0.01% by weight was obtained by substantially the same method as in Example 1.

### (Example 4)

In Example 3, a carbon nanotube composite material 230 prepared such that the content of the carbon nanotubes would be 0.048% by weight was obtained by substantially the same method as in Example 1. The content of the carbon nanotubes of 0.048% by weight corresponds to the percolation threshold, and the volume conductivity of the carbon nanotube composite material is 0.12 S/cm.

### (Example 5)

Accurately 50 mg of the carbon nanotube agglomerate obtained by substantially the same method as in Example 1 was measured out and put into a 100 ml flask (three necks; for vacuum; for temperature adjustment). The temperature was raised to 200°C in vacuum and then kept at this level for 24 hours. Then, the carbon nanotube agglomerate was dried. After the carbon nanotube agglomerate was dried, 100 ml of pure water and 10 mg of sodium deoxycholate were injected into the flask in which the carbon nanotube agglomerate was still in the heated and vacuum-treated state, so that the carbon nanotube agglomerate would not contact the atmosphere. For the dispersion step, a wet type jet mill (Nano Jet Pul (registered trademark) JN10 produced by JOKOH Co., Ltd.) was used. The carbon nanotube agglomerate was caused to pass in a 200 µm flow path at a pressure of 600 MPa to be dispersed in pure water. As a result, a carbon nanotube dispersion solution having a concentration by weight of 0.033% by weight was obtained. The dispersion solution was further stirred at room temperature for 24 hours by a stirrer. In this step, the temperature of the solution was raised to 70°C to volatilize water so that about 150 ml of water would be left. At this point, the concentration by weight of the carbon nanotubes was about 0.075% by weight (dispersion step). In this manner, the carbon nanotube dispersion solution was obtained. In this example, fluorocarbon rubber latex (produced by Daikin Industries, Ltd.) was used as a matrix. 150 ml of the carbon nanotube dispersion solution was added to 50 ml of a solution of fluorocarbon rubber such that the content of the carbon nanotubes would be 0.013% where the mass of the entirety of the carbon nanotube composite material was 100% by weight. The solutions were stirred at room temperature for 16 hours under the condition of about 300 rpm by use of a stirrer and thus concentrated until the entire amount became about 50 ml.

The fully mixed solution was poured into a container such as a laboratory dish or the like and dried at room temperature for 12 hours to solidify the carbon nanotube composite material. The solidified carbon nanotube composite material was put into a vacuum drying furnace of 80°C and dried over 24 hours to remove the solvent. In this manner, a carbon nanotube composite material 240 in Example 5 was obtained

(the sample has a circular sheet-like shape having a diameter of 77 mm and a thickness of about 300 µm).

### (Example 6)

In Example 6, a carbon nanotube composite material 250 prepared such that the content of the carbon nanotubes would be 0.1% by weight was obtained by substantially the same method as in Example 1, using polystyrene (SPJ produced by PS Japan Corporation) as a matrix.

### (Example 7)

In Example 7, a carbon nanotube composite material 260 prepared such that the content of the carbon nanotubes would be 0.1% by weight was obtained by substantially the same method as in Example 1, using PMMA (SUMIPEX produced by Sumitomo Chemical Co., Ltd.) as a matrix.

### (Example 8)

In Example 8, a carbon nanotube composite material 270 prepared such that the content of the carbon nanotubes would be 0.1% by weight was obtained by substantially the same method as in Example 1, using acrylonitrile-butadiene-styrene copolymeric synthetic resin (ABS resin) (produced by Toray Industries, Inc.).

### (Example 9)

In Example 9, a carbon nanotube composite material 280 prepared such that the content of the carbon nanotubes would be 1% by weight was obtained by substantially the same method as in Example 1, using acrylonitrile-butadiene-styrene copolymeric synthetic resin (ABS resin) (produced by Toray Industries, Inc.) as a matrix.

### (Example 10)

In Example 10, a carbon nanotube composite material 290 prepared such that the content of the carbon nanotubes would be 1% by weight was obtained by substantially the same method as in Example 1, using polycarbonate (PC) (produced by Teijin Limited).

### (Example 11)

In Example 11, a carbon nanotube composite material 300 prepared such that the content of the carbon nanotubes would be 1% by weight was obtained by substantially the same method as in Example 1, using Aderenka EP4500 and Adeka Harderner EH (produced by Adeka Corporation), which were epoxy resins, as a matrix.

### (Comparative example 1)

Accurately 50 mg of carbon nanotube agglomerate obtained by a production method according to the present invention was measured out and put into a 100 ml flask (three necks; for vacuum; for temperature adjustment). The temperature was raised to 200°C in vacuum and then kept at this level for 24 hours. Then, the carbon nanotube agglomerate was dried. After the carbon nanotube agglomerate was dried, 100 ml of MIBK (methylisobutylketone) (produced by Sigma-Aldrich Japan) as a dispersion medium was injected into the flask in which the carbon nanotube agglomerate was still in the heated and vacuum-treated state, so that the carbon nanotube agglomerate would not contact the atmosphere. 950 mg of fluorocarbon rubber (Daiel-G912 produced by Daikin Industries, Ltd.) was added thereto to make the amount of the entire substance 300 ml. A stirrer was put into the beaker, and the beaker was sealed with an aluminum foil so that MIBK would not volatilize. The substance in the beaker was stirred at room temperature for 24 hours at 600 rpm by the stirrer. Then, the substance was kept at 80°C to completely volatilize the solvent. The resultant substance was pre-dried at 80°C for 12 hours. Next, 1000 mg of the pre-dried sample and 4000 mg of fluorocarbon rubber were put into a micro-volume, high-shear processing machine such that the processed product would have a content of the carbon nanotubes of 1%. With the gap and the diameter of the internal screw being set to 1 to 2 mm and 2.5Φ respectively, the sample and the fluorocarbon rubber were heated to 180°C to be melted and kneaded (rotation rate of the screw: 100 rpm; kneading time period: 10 minutes), and then extruded through a T-die. Next, the extruded substance was formed into a uniform film (thickness: 200 im) by a heat press. In this manner, a carbon nanotube composite material 900 in Comparative example 1 was obtained.

### (Comparative example 2)

In Comparative example 2, a carbon nanotube composite material 910 prepared such that the content of the carbon nanotubes would be 0.025% was obtained by substantially the same method as in Comparative example 1.

### (Comparative example 3)

In Comparative example 3, a carbon nanotube composite material 930 prepared such that the content of the carbon nanotubes would be 1% was obtained by substantially the same method as in Example 1, using single-walled carbon nanotubes (produced by Unidym) synthesized by a HiPco (High-pressure carbon monoxide process) method.

### [Properties of the carbon nanotubes produced by the HiPco method]

The carbon nanotube agglomerate produced by the HiPco method (hereinafter, such a carbon nanotube agglomerate will be referred to as the "HiPco") typically have properties including a length of 1 µm or less and an average diameter of 0.8 to 1.2 nm.

### [Raman spectrum evaluation on the HiPco]

In a Raman spectrum of the HiPco, a sharp G-band peak is observed in the vicinity of 1590 cm⁻¹. From this, it is understood that the carbon nanotubes include a graphite crystalline structure. A D-band peak, which is derived from a defect or the like, is observed in the vicinity of 1340 cm⁻¹. This indicates that the carbon nanotubes have a significant defect. A plurality of RBM modes, which are caused by a single-walled carbon nanotube, are observed on the low wavelength side (100 to 300 cm⁻¹). From this, it is understood that the graphite layer is formed of single-walled carbon nanotubes. The G/D ratio was measured to be 12.1.

### [Purity of the carbon nanotube agglomerate]

The carbon purity of the HiPco was found based on results of an element analysis performed by use of fluorescence X rays. The percentage by weight of carbon was 70% by weight, which was lower than that of the carbon nanotubes used in Example 1.

### [Microscopic image]

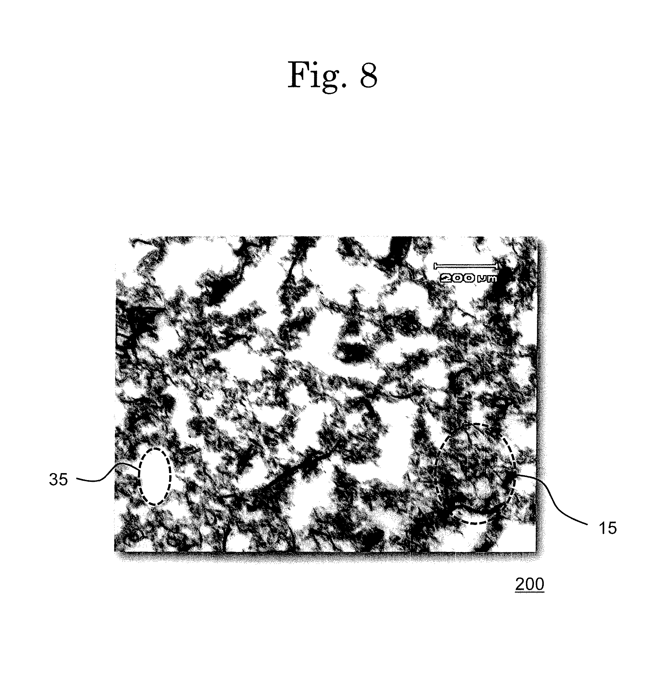

FIG. 8 shows a scanning electron microscopic image (hereinafter, referred to as an "SEM image") of a cross-section of the carbon nanotube composite material 200 in Example 1.

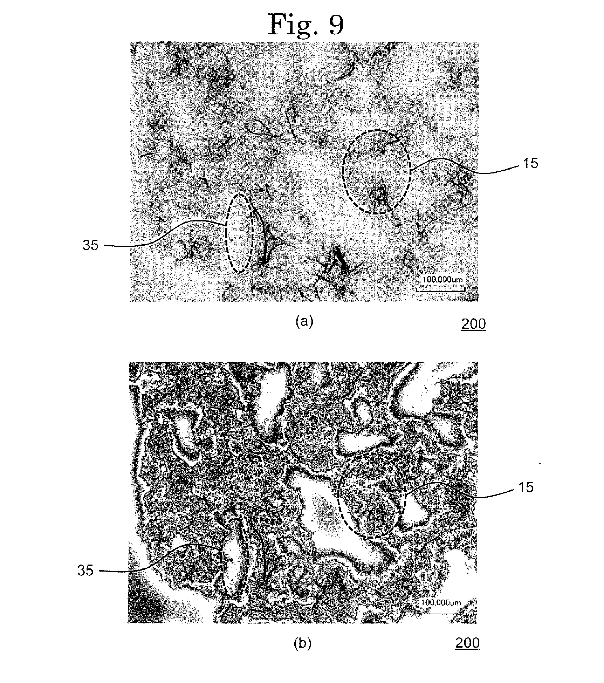

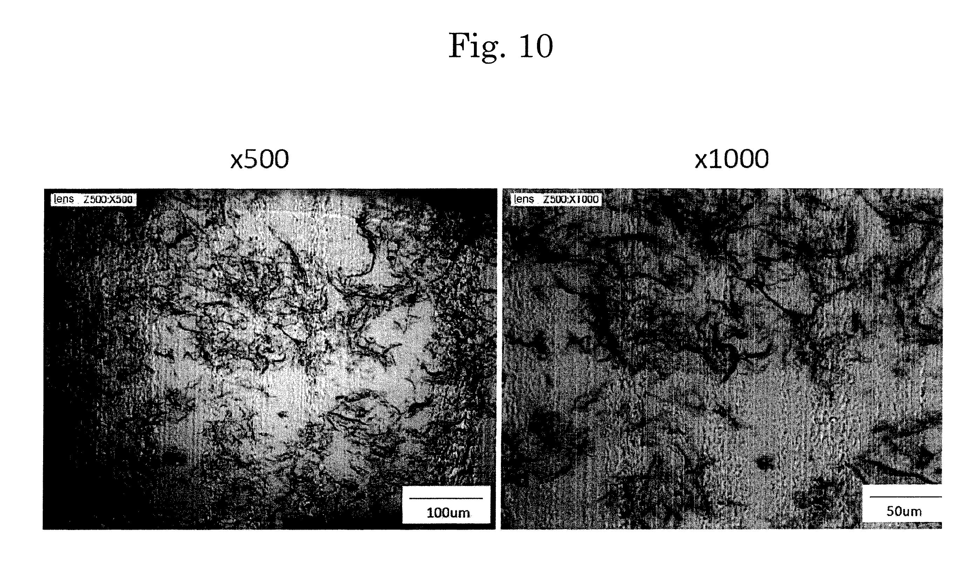

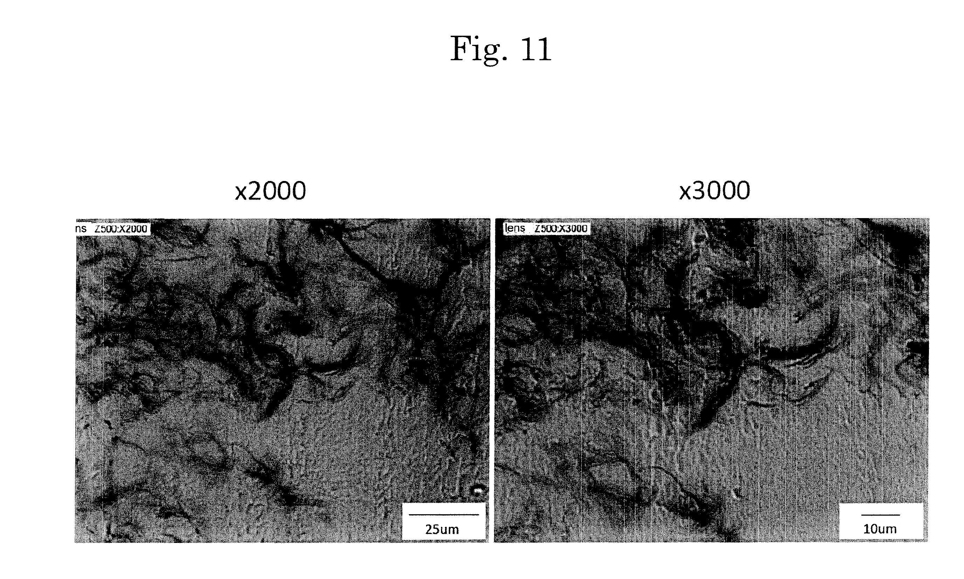

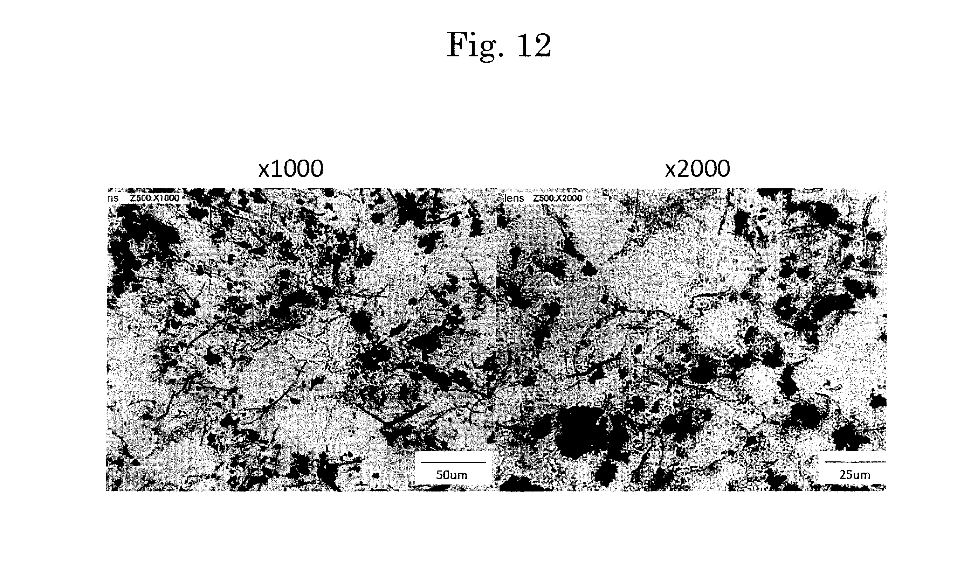

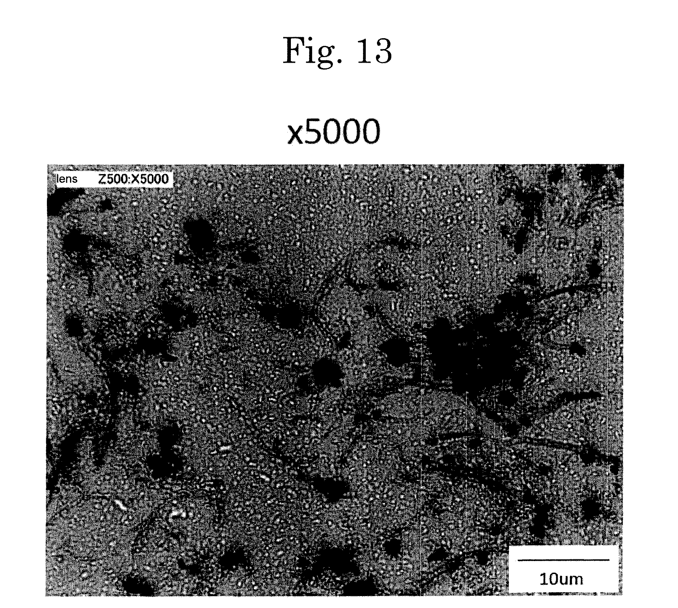

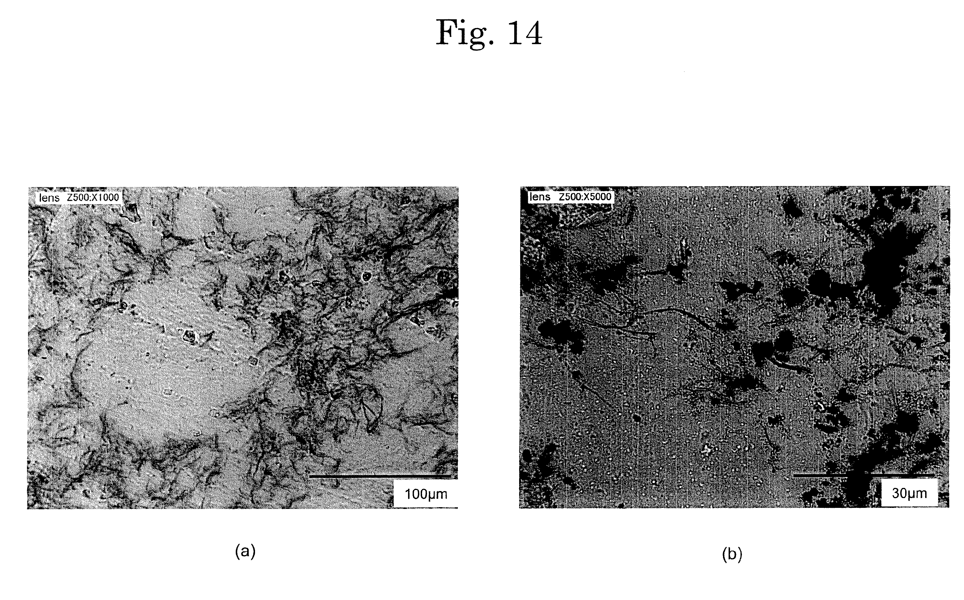

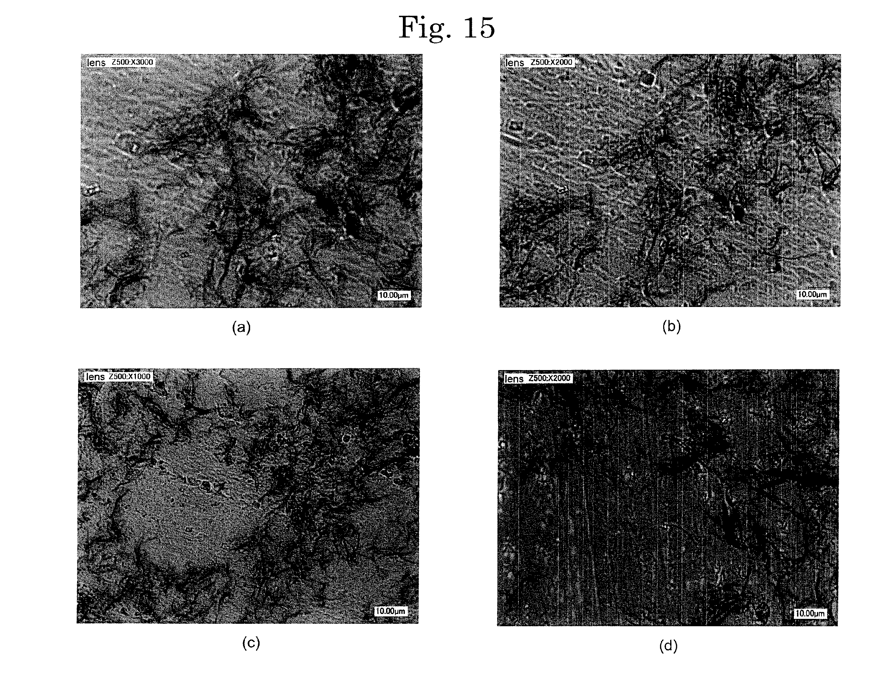

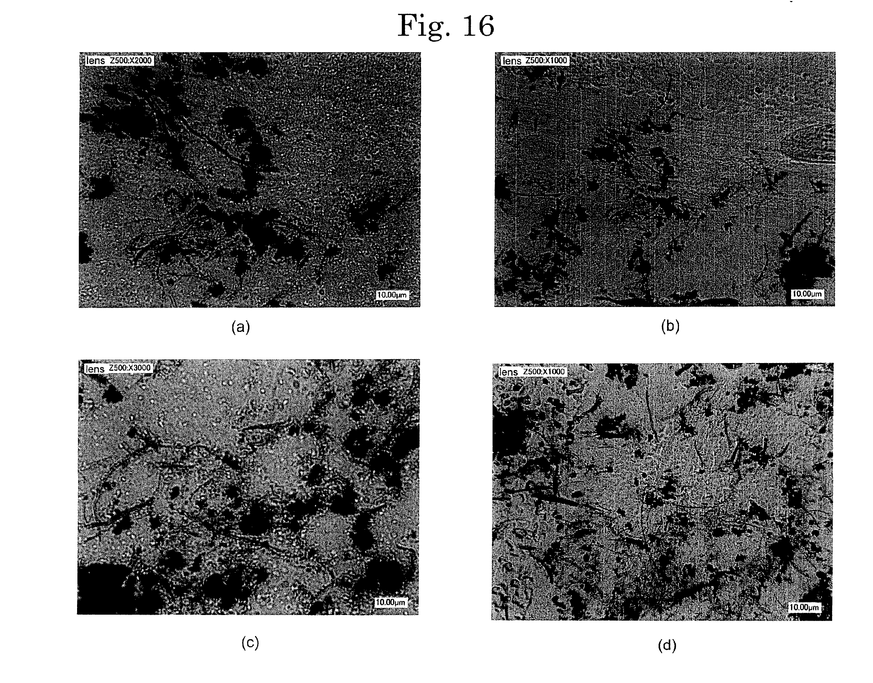

FIG. 9(a) shows an optical microscopic image of a cross-section of the carbon nanotube composite material 200 in Example 1, and FIG. 9(b) shows a laser microscopic image thereof. FIG. 10 and FIG. 11 show optical microscopic images of a cross-section of the carbon nanotube composite material 210 in Example 2. FIG. 10(a) shows a 500x image, FIG. 10(b) shows a 1000x image, FIG. 11(a) shows a 2000x image, and FIG. 11(b) shows a 3000x image. FIG. 13 and FIG. 13 show optical microscopic images of a cross-section of the carbon nanotube composite material 220 in Example 3. FIG. 12(a) shows a 1000x image, FIG. 12(b) shows a 2000x image, FIG. 13 shows a 5000x image. The black particle-like substance observed in FIG. 12 and FIG. 13 is a black pigment used to color the carbon nanotube composite material 200 in Example 3 black. FIG.14(a) shows an optical microscopic image of a cross-section of the carbon nanotube composite material 230 in Example 4. FIG.14(b) shows an optical microscopic image of a cross-section of the carbon nanotube composite material 240 in Example 5. FIG. 15 shows optical microscopic images of a cross-section of the carbon nanotube composite material 230 in Example 4. FIG. 15(a) shows a 3000x image, FIG. 15(b) shows a 2000x image, FIG. 15(c) shows a 1000x image, and FIG. 15(d) shows a 2000x image. FIG. 16 shows optical microscopic images of a cross-section of the carbon nanotube composite material 240 in Example 5. FIG. 16(a) shows a 2000x image, FIG. 16(b) shows a 1000x image, FIG. 16(c) shows a 3000x image, and FIG. 16(d) shows a 1000x image. Although not shown, substantially the same results were obtained in Examples 6 through 11.

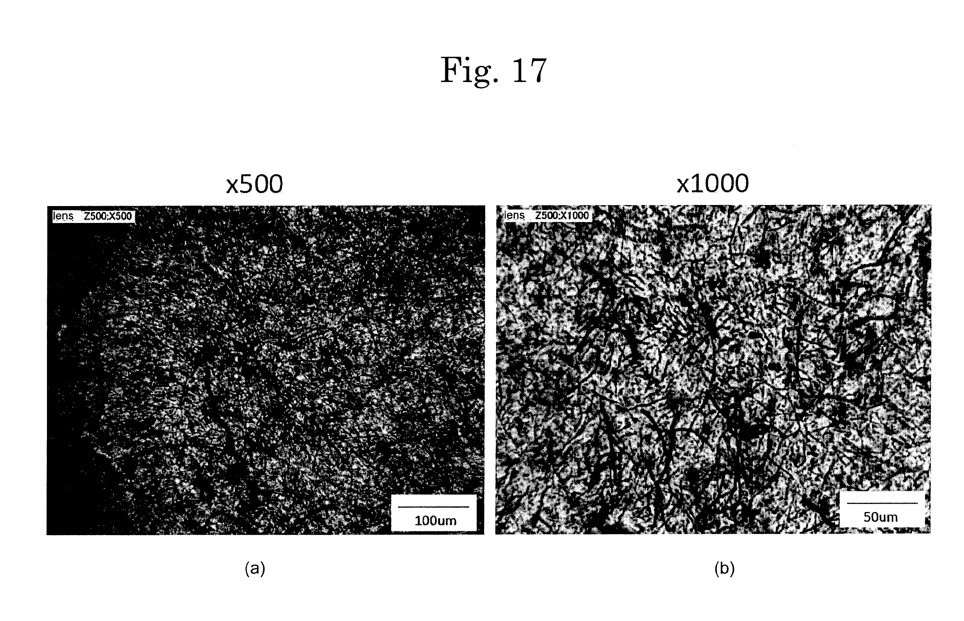

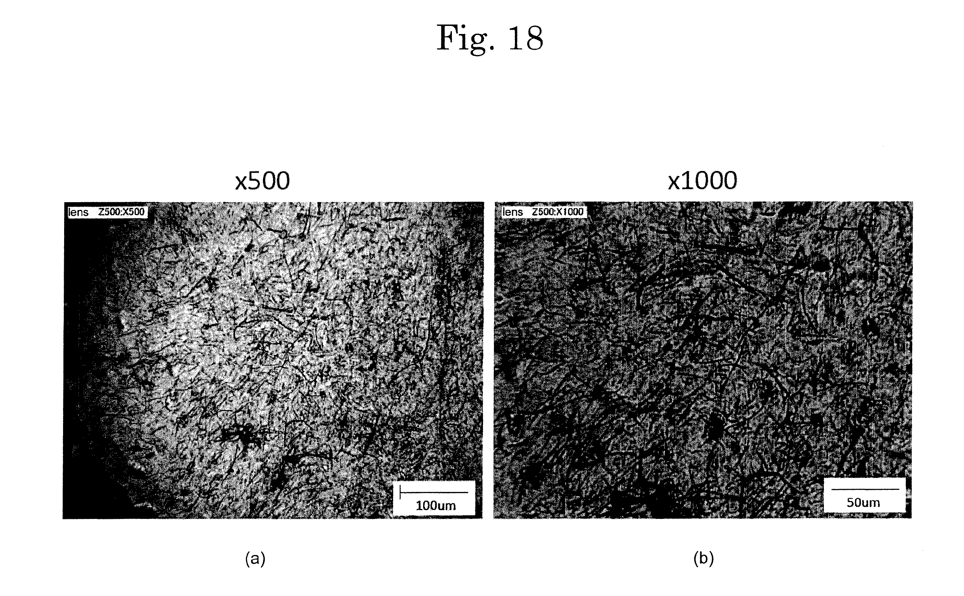

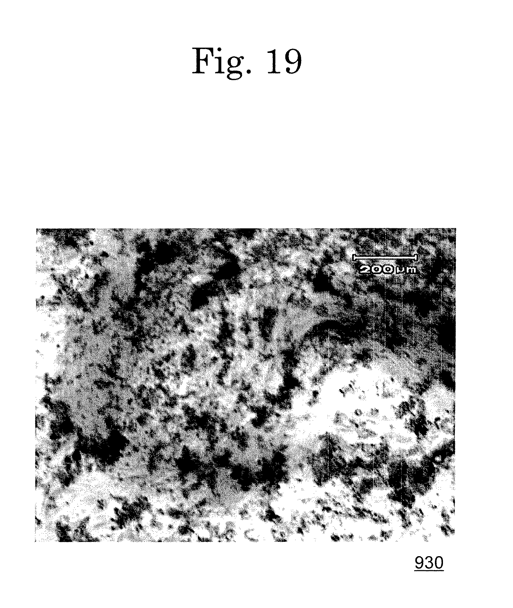

FIG. 17 shows optical microscopic images of the carbon nanotube composite material 900 in Comparative example 1. FIG. 18 shows optical microscopic images of the carbon nanotube composite material 910 in Comparative example 2. FIG. 19 shows an SEM image of the carbon nanotube composite material 930 in Comparative example 3.

Parts which appear black are each a CNT group 15 formed of a plurality of carbon nanotubes. Parts which appear white are each the basic material area 35. As is clear from the figures, the carbon nanotube composite material in each of Examples 1 through 5 (also in Examples 6 through 11) contains the carbon nanotubes 10 dispersed in the matrix 30 non-uniformly. There are a plurality of CNT groups 15 each formed of a plurality of CNTs 10, and a plurality of basic material areas 35 where no carbon nanotube is observed at least by a microscope. The carbon nanotube composite material has a sea-and-island structure formed of the basic material areas 35 and the CNT groups 15. In Examples 1 through 11, as shown in FIG. 2, the CNT group 15 formed of an agglomerate of a plurality of CNTs 10 includes the aggregated parts 11 and the separated part 13. The aggregated part 11a and the aggregated part 11b are separated from each other. In each of Examples 1 through 11, there are CNT groups 15 surrounding the basic material areas 35. Such CNT groups 15 are located along the edges of the basic material areas 35. The carbon nanotube composite material includes the basic material areas 35 and the CNT groups 15 each having a size of 20 µm. Since the CNT groups 15 form a continuous conductive path, an excellent conductivity is provided.

The carbon nanotube composite material in each of Examples 1 through 11 includes the CNT groups 15 continuously connecting a top end and a bottom end and/or a left end and a right end of a 300 µm-square area of a 1000x optical microscopic image. The carbon nanotube composite material in each of Examples 1 through 11 includes the basic material areas 35 having an amount of carbon nanotubes of 1.0% by weight or less and surrounded by the CNT groups 15, and the basic material areas 35 surrounded by the CNT groups 15 each have an area size of 10 µm or greater.

Referring to FIG. 17 and FIG. 18, the carbon nanotube composite material in each of Comparative examples 1 and 2 contains carbon nanotubes distributed therein more uniformly than the carbon nanotube composite materials in the examples, and neither the CNT groups 15 nor the basic material areas 35 are clearly observed. The carbon nanotube composite material 930 in Comparative example 3 shown in FIG. 19 also contains the carbon nanotubes dispersed therein more uniformly than the carbon nanotube composite materials in the examples, and neither the CNT groups 15 nor the basic material areas 35 are clearly observed.

### [Raman mapping]

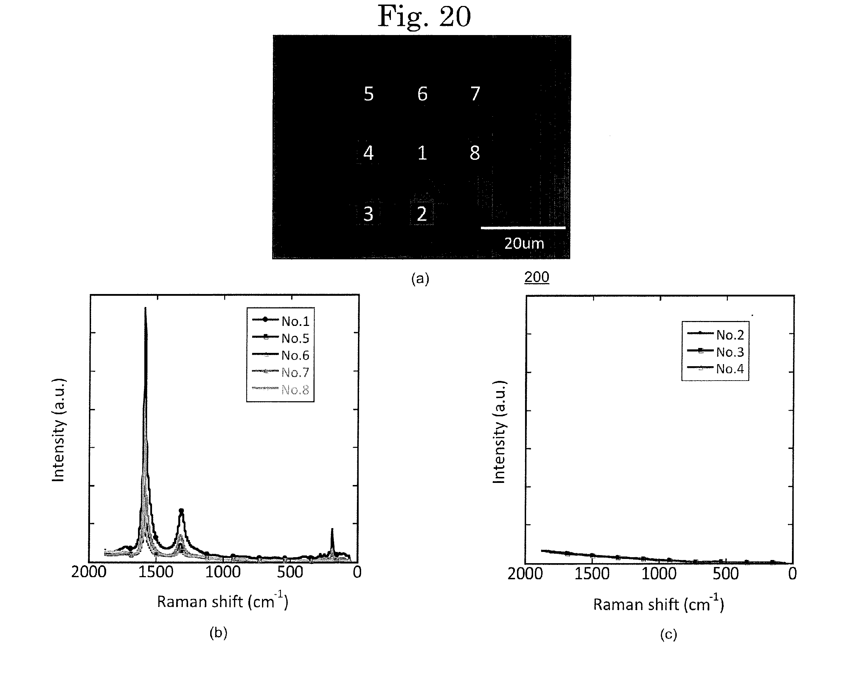

FIG. 20 shows Raman mapping performed on the carbon nanotube composite material 200 in Example 1. A Raman spectrum measured at a wavelength of 633 nm (by use of a micro-Raman spectrometer Almega XR; spot diameter: several micrometers) has been proved to be usable as an excellent index by which the carbon nanotubes in the carbon nanotube composite material can be evaluated regarding the RBM and the G/D ratio regardless of the type of the matrix in the carbon nanotube composite material. When being measured at a wavelength of 532 nm, the Raman spectrum depended on the type of the matrix used for the carbon nanotube composite material. FIG. 20(a) shows an optical microscopic image of an area on which the Raman mapping was performed. In FIG. 20(a), numerical figures 1 and 5 through 8 each represent the CNT group 15, whereas numerical figures 2 through 4 each represent a basic material area 35. FIG. 20(b) shows Raman spectra of the sites labeled with numerical figures 1 and 5 through 8 in FIG.20(a). FIG.20(c) shows Raman spectra of the sites labeled with numerical figures 2 through 4 in FIG. 20(a). As is clear from the figures, in the Raman spectra obtained by a Raman spectroscopic analysis performed at a wavelength of 633 nm, the sites recognized as the CNT groups 15 by the optical microscope each exhibit a peak (a conspicuous point of inflection and/or a projection of 500% or greater with respect to the baseline intensity that is visually confirmed in the graph) in the range of 1560 cm⁻¹ or greater and 1600 cm⁻¹ or less. By contrast, when being subjected to the Raman spectroscopic analysis performed at a wavelength of 633 nm, the sites recognized as the basic material areas 35 by the optical microscope do not exhibit any significant peak in the range of 1560 cm⁻¹ or greater and 1600 cm⁻¹ or less. Herein, when it is described that when the carbon nanotube composite material according to the present invention is subjected to a Raman spectroscopic analysis performed at a wavelength of 633 nm, no peak is included (detected) in the range of 1560 cm⁻¹ or greater and 1600 cm⁻¹ or less, such a description indicates that as shown in FIG. 20(c), no conspicuous point of inflection and/or no projection of 500% or greater with respect to the baseline intensity is visually confirmed in the graph.

Namely, the ratio of the maximum peak intensity observed in the range of 1560 cm⁻¹ or greater and 1600 cm⁻¹ or less by a Raman spectroscopic analysis performed on the CNT groups 15 at a wavelength of 633 nm, with respect to the maximum peak intensity observed in the range of 1560 cm⁻¹ or greater and 1600 cm⁻¹ or less by the Raman spectroscopic analysis performed on the basic material areas 35 at a wavelength of 633 nm, exceeds the limit of measurement. The limit of measurement depends on the noise level and the background of the Raman spectrum. In this measurement, the limit of measurement is estimated to be about 1000. Although not shown, substantially the same results were obtained in Examples 2 through 11. From these results, it has been found that the carbon nanotube composite materials in the examples contain the carbon nanotubes 10 dispersed in the matrix 30 non-uniformly.

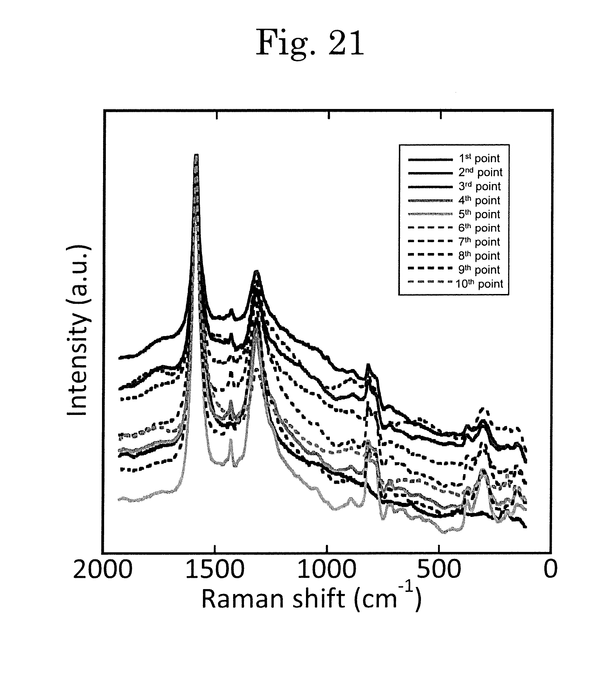

As shown in FIG. 21, when being subjected to a Raman spectroscopic analysis performed at a wavelength of 633 nm, the carbon nanotube composite material 900 in Comparative example 1 exhibits similar peaks in the range of 1560 cm⁻¹ or greater and 1600 cm⁻¹ or less at all ten measurement points. This indicates that the carbon nanotubes are dispersed in the matrix uniformly.

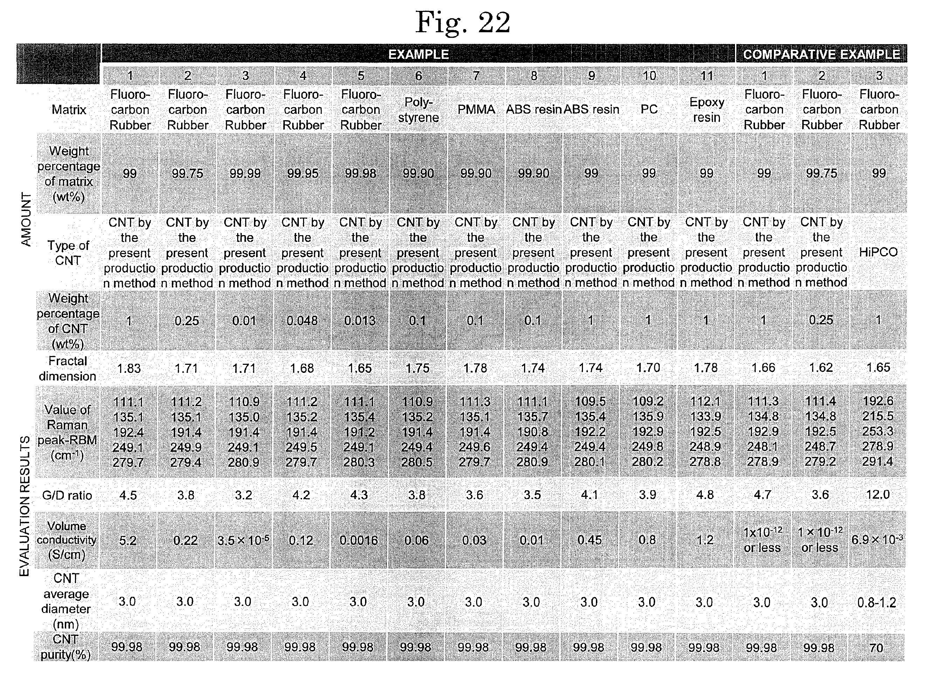

FIG. 22 shows measurement results of volume conductivity of the carbon nanotube composite materials in Examples 1 through 11 and Comparative examples 1 through 3 performed by a four-terminal method. The volume conductivity of the carbon nanotube composite material in each of Examples 1 and 2, and the volume conductivity of the carbon nanotube composite material in each of Comparative examples 1 and 2, which were obtained with the same matrix, the same type of carbon nanotubes and the same amount of carbon nanotubes, are different from each other by 10¹².

In Examples 3, 4, 5, 6, 7 and 8, the amount of carbon nanotubes is 0.1% by weight or less, and the area size is 10 µm or greater. In Examples 3, 4, 5, 6, 7 and 8, the carbon nanotube composite material 100 includes CNT groups 15 continuously connecting a top end and a bottom end or a left end and a right end of a 300 µm-square area of a 1000x optical microscopic image.

### [Fractal dimension analysis]

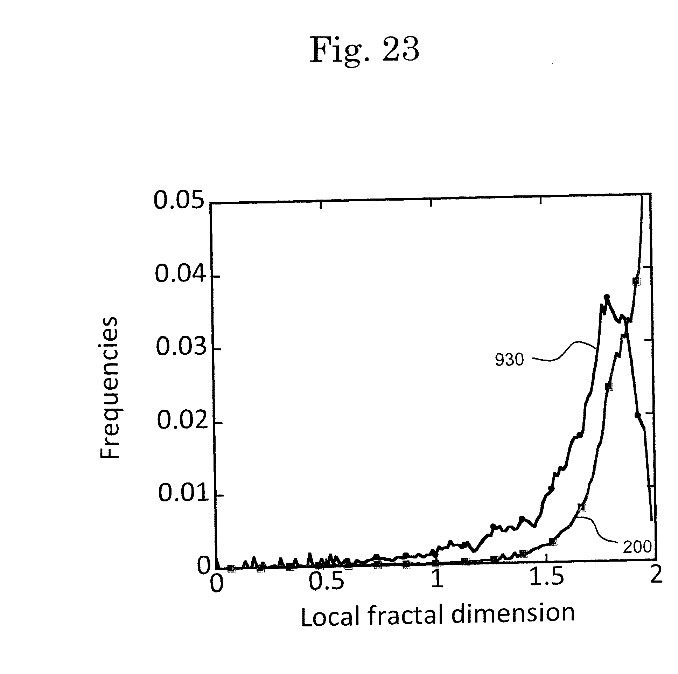

FIG. 23 shows results of a fractal dimensional analysis performed on the carbon nanotube composite materials. For the fractal dimensional analysis, ImageJ, which is open source image processing software, and FracLac Ver. 2.5, which is a fractal analyzing plug-in thereof, were used. These results show that in the carbon nanotube composite material 200 in Example 1, the CNT groups 15 have an average fractal dimension of 1.831 or greater. In the carbon nanotube composite material 200 having such a fractal dimension, the carbon nanotube groups contact each other efficiently to form a continuous conductive path. Thus, an excellent conductivity can be provided. FIG. 22 shows fractal dimensions in Examples 2 through 11 and Comparative examples 1 through 3 measured in substantially the same manner. The fractal dimension in each example is 1.7 or greater, whereas the fractal dimension in each comparative example is greater than 1.6 but less than 1.7. It is estimated that in the comparative examples, the ratio of formation of a continuous conductive path is low.

### [Raman spectrum]

The carbon nanotube composite materials in the above-described examples and comparative examples were subjected to a Raman spectroscopic analysis performed at a wavelength of 633 nm. When being subjected to the Raman spectroscopic analysis performed at a wavelength of 633 nm, the carbon nanotube composite materials in Examples 1 through 11 each exhibit peaks at 110±10 cm⁻¹, 190±10 cm⁻¹, 135±10 cm⁻¹, 250±10 cm⁻¹ and 280±10 cm⁻¹, namely exhibit peaks in a wide wavelength range. By contrast, the carbon nanotube composite material in Comparative example 3 does not exhibit even one peak in any of areas of 110±10 cm⁻¹, 190±10 cm⁻¹, and 200 cm⁻¹ or greater. Comparing the volume conductivity in Example 1 and the volume conductivity in Comparative example 3 obtained by the same method with the amount of carbon nanotubes, the carbon nanotube composite material in Example 1 shows a conductivity higher by four digits than that of the carbon nanotube composite material in Comparative example 3. From this, it is understood that the carbon nanotube composite material for which at least one peak is observed in each of the areas of 110±10 cm⁻¹, 190±10 cm⁻¹ and 200 cm⁻¹ or greater by a Raman spectroscopic analysis performed at a wavelength of 633 nm has a high conductivity.

### [G/D ratio]

FIG. 22 shows the G/D ratio in each of Examples 1 through 11 and Comparative examples 1 through 3. The carbon nanotube composite materials in the examples each have a G/D ratio of 3 or greater.

### [Conductivity of the carbon nanotubes]

The carbon nanotube composite material in each of Examples 1 through 6 was exposed to a solvent to remove the matrix and extract only the carbon nanotubes. The extracted carbon nanotubes were formed into Buckypaper having a thickness of 100 µm. The conductivity thereof was evaluated by the four-terminal method. The conductivity was 60 S/cm in Example 1, 58 S/cm in Example 2, 62 S/cm in Example 3, 58 S/cm in Example 4, 52 S/cm in Example 5, and 57 S/cm in Example 6.

### REFERENCE SIGNS LIST

10: Carbon nanotube; 15: CNT group; 30: Matrix; 35: Basic material area; 100: Carbon nanotube composite material; 200: Carbon nanotube composite material; 210; Carbon nanotube composite material; 220: Carbon nanotube composite material; 230: Carbon nanotube composite material; 240: Carbon nanotube composite material; 250: Carbon nanotube composite material; 260: Carbon nanotube composite material; 270: Carbon nanotube composite material; 280: Carbon nanotube composite material; 290: Carbon nanotube composite material; 300: Carbon nanotube composite material; 500: Production apparatus; 501: Substrate; 503: Catalyst layer; 505: Substrate holder; 510: Synthesis furnace; 521: Gas flow formation means; 530: Heating means; 531: Heating area; 541: First gas supply pipe; 543: Second gas supply pipe; 545: First gas flow path; 547: Second gas flow path; 550: Gas discharge pipe; 555: Pipe; 557: Pipe; 561: Source gas cylinder; 563: Atmospheric gas cylinder; 565: Reduction gas cylinder; 567: Catalyst activator cylinder; 571: First carbon weight flux adjustment means; 573: Second carbon weight flux adjustment means; 580: Gas mixture area; 600: Laser microscope; 650: Jig; 900: Carbon nanotube composite material; 910: Carbon nanotube composite material; 930: Carbon nanotube composite material

## Claims

1. A carbon nanotube composite material containing carbon nanotubes dispersed in a matrix, the carbon nanotube composite material comprising:
a carbon nanotube group formed of a plurality of carbon nanotubes, and a basic material area;
wherein the carbon nanotube composite material has a conductivity of 10⁻⁷ S/cm or greater while containing the carbon nanotubes in an amount of 0.0001% by weight or greater and 1.0% by weight or less.

2. The carbon nanotube composite material according to claim 1, wherein a ratio of a maximum peak intensity of the carbon nanotube group in the range of 1560 cm⁻¹ or greater and 1600 cm⁻¹ or less observed by a Raman spectroscopic analysis performed at a wavelength of 633 nm, with respect to a maximum peak intensity of the basic material area in the range of 1560 cm⁻¹ or greater and 1600 cm⁻¹ or less observed by the Raman spectroscopic analysis performed at a wavelength of 633 nm, is 5 or greater.

3. A carbon nanotube composite material containing carbon nanotubes dispersed in a matrix, the carbon nanotube composite material comprising:
a carbon nanotube group formed of a plurality of carbon nanotubes, and a basic material area;
wherein:
the carbon nanotube group has a peak in the range of 1560 cm⁻¹ or greater and 1600 cm⁻¹ or less when being subjected to a Raman spectroscopic analysis performed at a wavelength of 633 nm; and
the basic material area does not have a peak in the range of 1560 cm⁻¹ or greater and 1600 cm⁻¹ or less when being subjected to the Raman spectroscopic analysis performed at a wavelength of 633 nm.

4. The carbon nanotube composite material according to claim 3, wherein the carbon nanotube composite material has a conductivity of greater than 10⁻¹¹ S/cm.

5. The carbon nanotube composite material according to claim 1, wherein the carbon nanotube group has a fractal dimension of 1.7 or greater.

6. The carbon nanotube composite material according to claim 3, wherein the carbon nanotubes are contained in an amount of 0.0001% by weight or greater and 5% by weight or less where mass of the entirety of the carbon nanotube composite material is 100% by weight.

7. The carbon nanotube composite material according to claim 1, wherein the carbon nanotube composite material includes carbon nanotubes having a conductivity of 10 S/cm or greater.

8. The carbon nanotube composite material according to claim 1, wherein the carbon nanotubes each have a length of 0.1 µm or greater.

9. The carbon nanotube composite material according to claim 1, wherein the carbon nanotubes have an average diameter of 1 nm or greater and 30 nm or less.

10. The carbon nanotube composite material according to claim 1, wherein a carbon purity of the carbon nanotubes found by an analysis performed by use of fluorescence X rays is 90% by weight or greater.

11. The carbon nanotube composite material according to claim 1, wherein when the carbon nanotube composite material is subjected to a Raman spectroscopic analysis performed at a wavelength of 633 nm, at least one peak is observed in each of areas of 110±10 cm⁻¹, 190±10 cm⁻¹ and 200 cm⁻¹ or greater.

12. The carbon nanotube composite material according to claim 1, wherein a spectrum obtained by a resonance Raman scattering method has a G/D ratio of 3 or greater where G is a maximum peak intensity in the range of 1560 cm⁻¹ or greater and 1600 cm⁻¹ or less and D is a maximum peak intensity in the range of 1310 cm⁻¹ or greater and 1350 cm⁻¹ or less.

13. The carbon nanotube composite material according to claim 1, wherein the carbon nanotubes are single-walled carbon nanotubes.

14. The carbon nanotube composite material according to claim 1, wherein the matrix is an elastomer.

15. The carbon nanotube composite material according to claim 14, wherein the elastomer is at least one selected from natural rubber, epoxidized natural rubber, styrene-butadiene rubber, nitrile rubber, chloroprene rubber, ethylenepropylene rubber, butyl rubber, chlorobutyl rubber, acrylic rubber, silicone rubber, fluorocarbon rubber , butadiene rubber, epoxidized butadiene rubber, epichlorohydrin rubber, urethane rubber, polysulfide rubber, olefin-based thermoplastic elastomer, polyvinyl chloride-based thermoplastic elastomer, polyester-based thermoplastic elastomer, polyurethane-based thermoplastic elastomer, polyamide-based thermoplastic elastomer, and styrene-based thermoplastic elastomer.

16. The carbon nanotube composite material according to claim 1, wherein the matrix is a resin.

17. The carbon nanotube composite material according to claim 16, wherein the resin is at least one selected from unsaturated polyester, vinyl ester, epoxy, phenol (resol type), urea-melamine, polyimide, polyethylene terephthalate, polybutylene terephthalate, polytrimethylene terephthalate, polyethylene naphthalate, liquid crystal polyester, polyethylene, polypropylene, polybutylene, styrene-based resins, polyoxymethylene, polyamide, polycarbonate, polymethylenemethacrylate, polyvinylchloride, polyphenylenesulfide, polyphenyleneether, modified polyphenyleneether, polyimide, polyamideimide, polyetherimide, polysulfone, polyethersulfone, polyketone, polyetherketone, polyetheretherketone, polyetherketoneketone, polyarylate, polyethernitrile, phenol-based resins, phenoxy resins, and polytetrafluoroethylene.
